# EUROPEAN PATENT APPLICATION

(11) **EP 4 156 049 A1**
(43) Date of publication of application: **29.03.2023**
(21) Application number: 22193962.2
(22) Date of filing: 05.09.2022
(51) Int. Cl.: G06Q 10/047, G06Q 10/0633, G06Q 10/0835

(54) **APPARATUSES, COMPUTER-IMPLEMENTED METHODS, AND COMPUTER PROGRAM PRODUCTS FOR IMPROVED OBJECT PATHING**

(30) Priority: 22.09.2021 US 202117481983
(71) Applicant: Hand Held Products, Inc., Fort Mill, SC 29707 (US)
(72) Inventor: MEAGHER, Mark D., Charlotte, 28202 (US); ASPENNS, Glenn David, Charlotte, 28202 (US)
(74) Representative: Haseltine Lake Kempner LLP

(57) **Abstract**

Embodiments of the disclosure provide for improved object pathing. The improved object pathing is provided based at least in part on continuous, real-time sensor data transmitted over a high-throughput communications network that enables updating of object in real-time as changes to an environment are detected from high-fidelity, continuous, real-time sensor data. Some embodiments are configured for receiving, in real-time via a high-throughput communications network, a continuous set of sensor data associated with one or more real-time sensors, determining current location data associated with at least one of a set of travelling objects within an environment, identifying current pathing data associated with each travelling object, generating optimized pathing data for the at least one travelling object based on the current pathing data and the current location data associated with each travelling object, and outputting the optimized pathing data to a computing device associated with the at least one travelling obj ect.

## Description

### TECHNOLOGICAL FIELD

Embodiments of the present disclosure generally relate to generating data used to path travelling objects throughout an environment, and specifically to utilizing a continuous set of real-time sensor data obtained via a high-throughput communications network to generate optimized pathing data for one or more travelling objects operating within a particular environment.

### BACKGROUND

In various contexts, people, machines, and other objects often travel throughout a particular environment. Such objects may travel throughout the particular environment to perform one or more task(s). At any given time, such objects may interfere with one another and/or causes other issues with objects travelling throughout the environment and/or performing tasks therein. Paths may be generated for such objects in an attempt to such issues with objects operating within the environment. Applicant has discovered problems with current implementations for generating data for pathing travelling objects within a particular environment. Through applied effort, ingenuity, and innovation, Applicant has solved many of these identified problems by developing embodied in the present disclosure, which are described in detail below.

### BRIEF SUMMARY

In general, embodiments of the present disclosure provided herein provide for generation of optimized pathing data for one or more travelling objects in an environment. Other implementations for generation of optimized pathing data for one or more travelling objects will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method is provided. The computer-implemented method is provided for improved object pathing based on continuous, real-time transmission of sensor data from any of a myriad of real-time sensor(s) associated with a particular environment. The computer-implemented methods may be performed by any of a myriad of computing device(s) in hardware, software, firmware, and/or a combination thereof, as described herein. An example computer-implemented method includes receiving, in real-time via a high-throughput communications network, a continuous set of sensor data associated with one or more real-time sensors. The example computer-implemented method further includes determining a status associated with one or more portions of an environment based at least in part on the continuous set of sensor data. The example computer-implemented method further includes generating optimized pathing data for at least one travelling object in the environment based on the status associated with the one or more portions of the environment. The example computer-implemented method further includes outputting the optimized pathing data to a computing device associated with the at least one travelling object.

Additionally or alternatively, in some embodiments of the example computer-implemented method, determining a status associated with one or more portions of an environment includes determining, based at least in part on the continuous set of sensor data, current location data associated with at least one of a set of travelling objects within an environment, and identifying current pathing data associated with each of the set of travelling objects, each current pathing data associated with a current task process, and generating the optimized pathing data includes generating optimized pathing data for the at least one travelling object of the set of travelling objects based at least in part on the current pathing data associated with each of the set of travelling objects and the current location data associated with each of the set of travelling objects.

Additionally or alternatively, in some embodiments of the example computer-implemented method, generating the optimized pathing data for the at least one travelling object of the set of travelling objects includes determining a collision event will occur associated with at least a first travelling object of the set of travelling objects and a second travelling object of the set of travelling objects based at least in part on a first current pathing data corresponding to the first travelling object and a second current pathing data corresponding to the second travelling object, and generating the optimized pathing data comprising alternative pathing data based at least in part on the current location data and the alternative pathing data avoiding the collision event.

Additionally or alternatively, in some embodiments of the example computer-implemented method, generating the optimized pathing data for the at least one travelling object of the set of travelling objects includes determining a congestion event will occur associated with a plurality of the travelling objects based at least in part on the current pathing data associated with each of the plurality of travelling objects; and generating the optimized pathing data comprising alternative pathing data for the at least one travelling object of the set of travelling objects based at least in part on the current location data, the alternative pathing data avoiding the congestion event.

Additionally or alternatively, in some embodiments of the example computer-implemented method, the continuous set of sensor data comprises a plurality of continuous data subsets, each data subset associated with a different data type of a plurality of data types.

Additionally or alternatively, in some embodiments of the example computer-implemented method, outputting the optimized pathing data to the computing device associated with the at least one travelling object further includes causing the at least one travelling object to automatically traverse along a path represented by the optimized pathing data.

Additionally or alternatively, in some embodiments of the example computer-implemented method, outputting the optimized pathing data to the computing device associated with the at least one travelling object includes outputting the optimized pathing data to a client device associated with the at least one travelling object.

Additionally or alternatively, in some embodiments of the example computer-implemented method, determining, based at least in part on the continuous set of sensor data, the current location data associated with the at least one travelling object of the set of travelling objects within the environment includes detecting, from the set of sensor data, the at least one travelling object of the set of travelling objects within the environment; and triangulating the current location data associated with the at least one set of travelling objects from the continuous set of sensor data.

Additionally or alternatively, in some embodiments of the example computer-implemented method, generating the optimized pathing data for the at least one travelling object of the set of travelling objects includes generating an updated task process associated with the at least one travelling object of the set of travelling objects; and generating the optimized pathing data for the at least one travelling object based at least in part on the updated task process.

Additionally or alternatively, in some embodiments of the example computer-implemented method, generating the optimized pathing data for the at least one travelling object of the set of travelling objects includes generating an updated task process by reordering the current task process associated with the at least one travelling object of the set of travelling objects; and generating the optimized pathing data for the at least one travelling object based at least in part on the updated task process.

Additionally or alternatively, in some embodiments of the example computer-implemented method, the set of travelling objects comprises at least one independently travelling obj ect.

Additionally or alternatively, in some embodiments of the example computer-implemented method, the set of travelling objects comprises a plurality of instruction-controlled objects.

Other example computer-implemented are simultaneously provided herein. A second example computer-implemented method includes receiving, in real-time via a high-throughput communications network, a continuous set of sensor data associated with one or more real-time sensors. The second example computer-implemented method further includes determining a status associated with one or more portions of the environment based at least in part on the continuous set of sensor data. The second example computer-implemented method further includes generating optimized pathing data for at least one travelling object of the set of travelling objects based at least in part on the status associated with each of the one or more portions of the environment.

Additionally or alternatively, in some embodiments of the second computer-implemented method, the optimized pathing data avoids one or more location(s) at which an event was detected.

Additionally or alternatively, in some embodiments of the second computer-implemented method, the optimized pathing data passes proximate to at least one of the one or more location(s) at which the event was detected.

In accordance with a second aspect of the present disclosure, an apparatus is provided. The apparatus is provided for improved object pathing based on continuous, real-time transmission of sensor data from any of a myriad of real-time sensor(s) associated with a particular environment. An example apparatus includes at least one processor and at least one memory, the at least one memory having computer-coded instructions stored thereon that, in execution by the at least one processor, causes the apparatus to perform any one of the computer-implemented methods described herein. Another example apparatus includes means for performing each step of any one of the computer-implemented methods described herein.

In accordance with a third aspect of the present disclosure, a computer program product is provided. The computer program product includes at least one non-transitory computer-readable storage medium having computer program code stored thereon that, in execution by at least one processor, is configured for performance of any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a system that may be specially configured within which embodiments of the present disclosure may operate;
FIG. 2 illustrates a block diagram of an example real-time pathing apparatus that may be specially configured in accordance with at least some example embodiments of the present disclosure;
FIG. 3A illustrates a visualization of an example environment within which real-time sensor data is aggregated and processed in accordance with at least some example embodiments of the present disclosure;
FIG. 3B illustrates a visualization of optimized pathing data generated for travelling objects based at least in part on captured real-time sensor data in accordance with at least some example embodiments of the present disclosure;
FIG. 4 illustrates a data flow for generating optimized pathing data based at least in part on captured continuous real-time sensor data set(s) in accordance with at least some example embodiments of the present disclosure;
FIG. 5 illustrates an example computing environment including associated data and computing devices in accordance with at least some example embodiments of the present disclosure;
FIG. 6 illustrates a flowchart depicting example operations of an example process for generating optimized pathing data for at least one travelling object in accordance with at least some example embodiments of the present disclosure;
FIG. 7 illustrates a flowchart depicting example operations of an example process for generating optimized pathing data based on a collision event in accordance with at least some example embodiments of the present disclosure;
FIG. 8 illustrates a flowchart depicting example operations of an example process for generating optimized pathing data based on a congestion event in accordance with at least some example embodiments of the present disclosure;
FIG. 9A illustrates a flowchart depicting example operations of an example process for causing automatic traversal along a path in accordance with at least some example embodiments of the present disclosure;
FIG. 9B illustrates a flowchart depicting example operations of an example process for outputting optimized pathing data to a client device in accordance with at least some example embodiments of the present disclosure;
FIG. 10 illustrates a flowchart depicting example operations for determining current location data associated with at least one travelling object in accordance with at least some example embodiments of the present disclosure; and
FIG. 11 illustrates a flowchart depicting example operations for generating optimized pathing data based on an updated task process in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It will be appreciated that the data types, data objects, and other data representations described herein may be embodied in any of a myriad of manners. For example, such data representations may be embodied by any of a myriad of primitive data types, custom object implementations, and/or the like, without deviating from the scope and spirit of the present disclosure.

### Overview

Travelling objects interact within a particular environment in various contexts. The travelling objects may interact within, and/or with, the particular environment to accomplish one or more designated tasks. As such travelling objects travel throughout the environment and perform tasks, and/or as other entities within the environment perform tasks and/or otherwise operate, the environment may change. For example, the travelling objects may change location, items within the environment may change location, events may occur within the environment, open pathways may be changed, and/or other circumstances within the environment may change in a manner that affects the ability for each of the travelling objects to travel and/or operate.

As the environment changes, operations to be performed by a particular travelling object may become affected by such changes. For example, due to travel by various travelling objects, one or more areas of the environment may become congested with items, travelling objects, and/or the like. Such congestion may make it difficult or impossible for travelling objects to travel through the area efficiently or at all. Alternatively or additionally, in some circumstances, a crash between two or more travelling objects may make travel within a particular area impossible (e.g., due to a blockage by disabled object(s)) or difficult. Additionally or alternatively still, in some embodiments, changes to the available pathways in the environment itself may make travel along a particular path impossible for travelling objects within the environment. In this regard, monitoring the environment and/or changes in circumstances within the environment enables updates to be made that account for the status of the environment and/or changes within the environment.

Embodiments of the present disclosure utilize sensor data captured and communicated via real-time sensor(s) within and/or otherwise associated with an environment to perform any number of determination(s). In some embodiments, the sensor data is communicated via high-throughput communications network(s) for processing by one or more computing device(s), system(s), and/or the like. The high-throughput communications network(s) are configured to sufficiently enable a real-time, continuous flow of sensor data from such real-time sensor(s) to the one or more computing device(s), system(s), and/or the like, for further processing. For example, the real-time, continuous set of sensor data may be utilized to identify travelling object(s), determine paths being traversed by travelling object(s) within the environment, determine current circumstances or events occurring within the environment, determining future circumstances or events that will occur within the environment, and/or the like. Based on the continuous and real-time nature of the sensor data being processed, such determinations may be updated in real-time or near-real-time (e.g., within milliseconds or seconds) as changes in the environment occur.

One such example context includes operations occurring within a warehouse environment. Any number of travelling objects may travel within the warehouse environment to accomplish particular tasks. For example, human pickers may move throughout the environment to perform picking task(s) (e.g., identify and remove or relate items stored within the warehouse environment). Alternatively or additionally, automatically operating robots, autonomous vehicles, and/or the like may similarly operate within the warehouse environment to perform such picking task(s), and/or reposition users within the environment to perform such picking task(s). The users, vehicles, robots, and/or the like may travel along a particular path based on pathing data sent to a computing device associated with travelling object. As the travelling object travels, the travelling object or an associated user may perform any number of task(s), for example based on a defined task process corresponding to the travelling object.

As travelling objects traverse throughout the warehouse environment and perform one or more task(s), the environment may be monitored by any number of real-time sensors. The real-time sensors may include any number of sensors and sensor types positioned at different locations within the warehouse environment. For example, real-time image data (e.g., captured still image data objects, video data object(s), and/or frames of video data object(s)) may be captured by image and/or video sensors within the environment, real-time motion data may be captured by motion sensors within the environment, real-time location data may be captured by location sensor(s) within the environment, and/or the like. Each of the real-time sensors may transmit the real-time sensor data captured by the respective real-time sensor over a high-throughput communications network to one or more system(s), device(s), and/or the like, for processing. For example, the real-time sensors may each transmit a real-time, continuous set of captured sensor data to a real-time data aggregation and processing system that receives and processes the continuous set of sensor data. The real-time data aggregation and processing system may process the received continuous set of sensor data to detect travelling object(s) in the captured continuous set of sensor data, location(s) associated therewith, circumstances and/or events occurring in the environment, and/or the like. Additionally or alternatively, the real-time data aggregation and processing system may utilize such continuous set of sensor data, detected and/or determined travelling objects, and/or circumstances to generate and/or output optimized pathing data for one or more travelling object(s), updated task process(es) for one or more travelling object(s), and/or the like. The real-time data aggregation and processing system may output the generated data for each travelling object to a computing device associated therewith for use in traversing along a path, performing subsequent task(s), and/or the like.

Embodiments of the present disclosure utilize particular elements to provide various technical improvements to various technical fields. For example, some embodiments of the present disclosure process a particular continuous set of sensor data associated with real-time sensor(s) associated with a particular environment to optimize pathing data of travelling objects within the environment in a manner that reduces and/or avoids collisions, congestion, and/or other undesired circumstances within the environment. Additionally or alternatively, some embodiments of the present disclosure advantageously utilize a high-throughput communications network to enable communication of a real-time, continuous set of sensor data from one or more real-time sensors for processing. In this regard, the continuous set of sensor data may be updated continuously to enable real-time or near-real-time determination of circumstances within the environment and/or updating of data (e.g., pathing data) accordingly based on the changing circumstances within the environment. For example, as changes in the environment occur in real-time, updated and high-fidelity sensor data depicting and/or representing such changes is aggregable in real-time such that updated pathing data is generated and transmitted in real-time. Additionally or alternatively, some embodiments of the present disclosure determine location data object(s) for one or more travelling objects based on such a continuous set of sensor data, enabling such real-time or near-real-time locations of such travelling objects to be accounted for. Additionally or alternatively, some embodiments of the present disclosure utilize a continuous set of sensor data that includes real-time image data depicting travelling object(s), such that location data object(s) associated with such travelling object(s) are determinable in real-time or near-real-time without particular device hardware that explicitly provide location data objects. In this regard, some embodiments of the present disclosure provide any or all such technical improvements in the technical fields of sensor data processing, image processing, autonomous machine control, and sensor data-based environment control.

### Definitions

The term "real-time" refers to capture and/or communication of data between computing devices in a sufficiently short period of time to enable continuous transmission of such data between the computing devices. In some embodiments, real-time refers to transmission of high-fidelity sensor data from a first computing device to a second computing device within milliseconds or within a second.

The term "computing device" refers to hardware, software, firmware, and/or a combination thereof, that stores and/or processes data. In some embodiments, a computing device includes hardware, software, firmware, and/or a combination thereof, that performs particular desired functionality associated with the computing device.

The term "client device" refers to a computing device associated with an object within a particular environment that renders interface(s) associated with data for traversing along a path and/or completing one or more task operation(s). A client device is specially configurable via software, hardware, firmware, or any combination thereof to perform operations associated with completion of one or more particular task(s). Non-limiting examples of a client device include a smartphone, a tablet, a wearable, a mobile terminal, a laptop, a personal computer, a vehicle information display, a vehicle control system, and an automated robot.

The term "control device" refers to a computing device associated with an object within a particular environment that controls movement of the object. A control device includes or is communicable with any of a myriad of mechanisms for maneuvering the object within the object within an environment.

The term "high-throughput communications network" refers to one or more high-capacity, high-throughput, and low latency communications network(s) established to enable communication between two or more computing devices. Non-limiting examples of a high-throughput communications network include a fifth generation ("5G") cellular communications network and a Wi-Fi 6 enabled communications network satisfying the IEEE 802.11ax standard. A high-throughput communications network is configured with high bandwidth and low latency to enable consistent and/or continuous real-time communication of high fidelity data transmissions, such as image transmissions, video transmissions, and/or other continuous data.

The term "real-time sensor" refers to hardware, software, firmware, and/or a combination thereof, that captures a particular type of data associated with a particular environment. A real-time sensor is capable of transmitting captured sensor data to one or more directly connected computing devices for processing, and/or to access a high-throughput communications network for transmitting such captured sensor data to one or more remote computing device(s) (e.g., a real-time data aggregation and processing system). In some embodiments, a real-time sensor may include a single computing device or any number of computing devices connected with one another. Non-limiting examples of a real-time sensor include an image sensor (e.g., an image camera), a video sensor (e.g., a video camera), a LiDAR sensor, a motion sensor, a location sensor (e.g., one or more sensors of a real-time location sensor system), an RFID reader, and a range sensor.

The term "sensor data" refers to data captured by a real-time sensor that is transmittable via a high-throughput communications network in real-time or near-real-time (e.g., within a time interval sufficient to enable continuous transmission of said data). In some embodiments, sensor data is embodied in one or more high-fidelity portions of data that are transmittable in real-time and/or continuously only via a high-throughput communications network.

The term "continuous set of sensor data" refers to a real-time transmitted flow of sensor data received by a computing device from one or more real-time sensors via a high-throughput communications network. In some embodiments, a continuous set of sensor data includes any number of sensor data portions captured entirely via real-time sensors onboard, affixed to, and/or otherwise part of one or more travelling object(s) within an environment and/or one or more client device(s) associated with travelling object(s) within the environment.

The term "data type" refers to a categorization or data encoding of sensor data. In some embodiments, a data type for particular sensor data is based on a real-time sensor that captured such sensor data.

The term "continuous data subset" refers to a subset of a continuous set of sensor data associated with a particular data type.

The term "travelling object" refers to a user, a computing device, or a system of computing devices that traverse through a particular environment. Non-limiting examples of a travelling object includes a person, an autonomous vehicle, a manually operated vehicle, a robot, and a movable machine.

The term "independently travelling object" refers to an object moving within a particular environment that is not controllable by a real-time data aggregation and processing system associated with the particular environment. Non-limiting examples of an independently travelling object include a person and a manually operated vehicle.

The term "instruction-controlled object" refers to an object moving within a particular environment that is controllable via transmitted instructions by a real-time data aggregation and processing system or another system associated therewith. Non-limiting examples of an instruction-controlled object include an autonomous vehicle, a robot, and a movable machine.

The term "current location data" when used with respect to a travelling object refers to electronically managed data representing a particular position of the travelling object within a particular environment. In some embodiments, the current location data embodies absolute position data based on a particular defined scale that encompasses an area larger than the particular environment, including and without limitation GPS coordinates and/or latitude and longitude coordinate. In some embodiments, the current location data embodies relative position data on a defined scale associated with only the particular environment, including and without limitation a localized position within the environment starting from a particular origin point, a labelled position, and/or an aisle and/or bay position.

The term "pathing data" refers to electronically managed data representing a path along which a travelling object is to traverse.

The term "current pathing data" refers to pathing data that a travelling object is currently traversing and/or intending to traverse at one or more future time period(s).

The term "optimized pathing data" refers to electronically managed data representing a path along which a travelling object is to traverse based on detected objects, events, and/or other determinations in one or more portions of captured real-time sensor data. In some embodiments, optimized pathing data includes electronically managed data representing a path that avoids one or more particular events detected from real-time sensor data while simultaneously enabling completion of a task process or at least a portion of a task process.

The term "alternative pathing data" refers to electronically managed data representing a change from a current pathing data to new pathing data. In some embodiments, alternative pathing data represents new pathing data that is utilized to replace the current pathing data. In some embodiments, alternative pathing data represents one or more changes to be applied to current pathing data to update one or more portions of the current pathing data.

The term "collision event" refers to an electronically managed determination indicating that at least two travelling objects will be located at overlapping areas during at least one timestamp based on the current pathing data corresponding to each of the at least two travelling objects.

The term "congestion event" refers to an electronically managed determination indicating that a threshold number of travelling objects will be located within a particular portion of the environment during at least one timestamp based on the current pathing data corresponding to each of the at least two travelling objects, and/or indicating that the location of one or more travelling object(s) at a particular portion of the environment during at least one timestamp will delay traversal of one or more other travelling object(s) requiring traversal through the particular portion of the environment during the at least one timestamp. In some embodiments, a congestion event includes detection of another travelling object, temporary stationary object, and/or a misplaced item, obstructing at least a portion of a traversable area.

The term "automatically traverse" refers to instruction-driven traversal of a travelling object via activation of mechanisms of the travelling object based on instructions transmitted to one or more computing device(s) of and/or otherwise associated with the travelling object. In some embodiments, a travelling object "automatically traverses" by processing transmission(s) from a real-time data aggregation and processing system, or another system associated therewith, to activate particular mechanism(s) that cause movement of the travelling object. It will be appreciated that the particular movements of a travelling object that automatically traverses may rely on one or more sensor(s) included in and/or otherwise associated with the travelling object, for example and without limitation video sensors, image sensors, LIDAR sensors, motion sensors, and/or the like, that capture sensor data processed to determine the sub-movements of the travelling object towards a particular target location.

The term "task operation" refers to particular action(s) to be performed by one or more travelling object(s) within a particular environment by interaction between the travelling object and at least one portion of the environment. Non-limiting examples of a task operation include a picking operation to be performed automatically by an autonomous vehicle and/or a human actor within an environment. In some embodiments, a task operation includes one or more data-driven action(s) indicating performance of a particular action and/or confirming performance of a particular action, including without limitation scanning of a machine-readable label (e.g., a barcode, QR code, and/or the like) on a particular item, relocating a particular item through one or more sensor(s) to another location, and/or picking an item from a current location and depositing it in another location for confirmation of the identity of the item and/or further processing of the item by another system. In some embodiments, a task operation includes or is associated with target location data embodying the location at which the task operation is performable.

The term "task process" refers to electronically managed data representing one or more tasks to be performed by a travelling object within a particular environment. In some embodiments, a task process refers to electronically managed data indicating one or more items within a particular environment to be obtained, relocated, and/or picked by a particular travelling obj ect.

The term "current task process" refers to a task process currently being performed by a travelling object and/or intended to be performed by the travelling object at one or more future time period(s).

The term "updated task process" refers to electronically managed data representing a change from a current task process to a new task process. In some embodiments, an updated task process represents a new task process that is utilized to replace the current task process. In some embodiments, updated task process represents one or more changes to be applied to a current task process to update one or more portions of the current task process.

The term "environment" refers to a defined physical area within which one or more travelling objects is operating and within which one or more real-time sensors are positioned for capturing real-time sensor data associated with the defined physical area.

The term "real-time data aggregation and processing system" refers to one or more computing device(s) specially configured via hardware, software, firmware, and/or a combination thereof, to receive and process real-time sensor data from any number of real-time sensors. A real-time data aggregation and processing system includes specially configured server(s), database(s), processing device(s), and/or other computing device(s).

The term "historical data" refers to previously stored data associated with an environment, object(s) in the environment, scenario(s) within the environment, and/or the like, that are maintained by one or more computing device(s) for processing during one or more subsequent timestamps. Non-limiting examples of historical data includes real-time sensor data captured at a previous timestamp, data embodying results of determination(s) made from previously captured real-time sensor data, and/or current or previous task process(es) associated with one or more travelling objects stored for processing at a subsequent timestamp in one or more data repositories.

The term "location sensor" refers to a particular real-time sensor that captures location data indicating the location of the real-time sensor within a particular environment or the location of detected object(s) within the environment. The term "real-time location data" refers to high-fidelity location data transmittable continuously or near-continuously over a high-throughput communications network.

The term "video sensor" refers to a real-time sensor that captures real-time video data representing the environment, wherein the real-time video data embodies any number of frames of image data. The term "real-time video data" refers to high-fidelity video data transmittable continuously or near-continuously over a high-throughput communications network.

The term "image sensor" refers to a real-time sensor that captures image data objects representing a still representation of a particular environment. Similar to video sensors described herein, an image sensor may be fixed or mobile. The term "real-time image data" refers to high-fidelity image data transmittable continuously or near-continuously over a high-throughput communications network. Non-limiting examples of image data include still image data object(s), video data object(s), and individual frames of video data object(s).

The term "motion sensor" refers to a real-time sensor that captures data representing motion within a particular environment. The term "real-time motion data" refers to high-fidelity motion data transmittable continuously or near-continuously over a high-throughput communications network.

The term "mobile" when used with respect to a real-time sensor refers to a real-time sensor that can be repositioned, rotated, and/or otherwise reorientated within a particular environment. It will be appreciated that a mobile real-time sensor may monitor a dynamically changing area within an environment as the mobile real-time sensor moves throughout the environment. At one or more timestamps, a mobile real-time sensor may monitor an area of an environment not monitored by a fixed real-time sensor.

The term "fixed" when used with respect to a real-time sensor refers to a real-time sensor that is fixed at a static position, rotation, and/or orientation within a particular environment within a particular environment.

### Example Systems and Apparatuses of the Disclosure

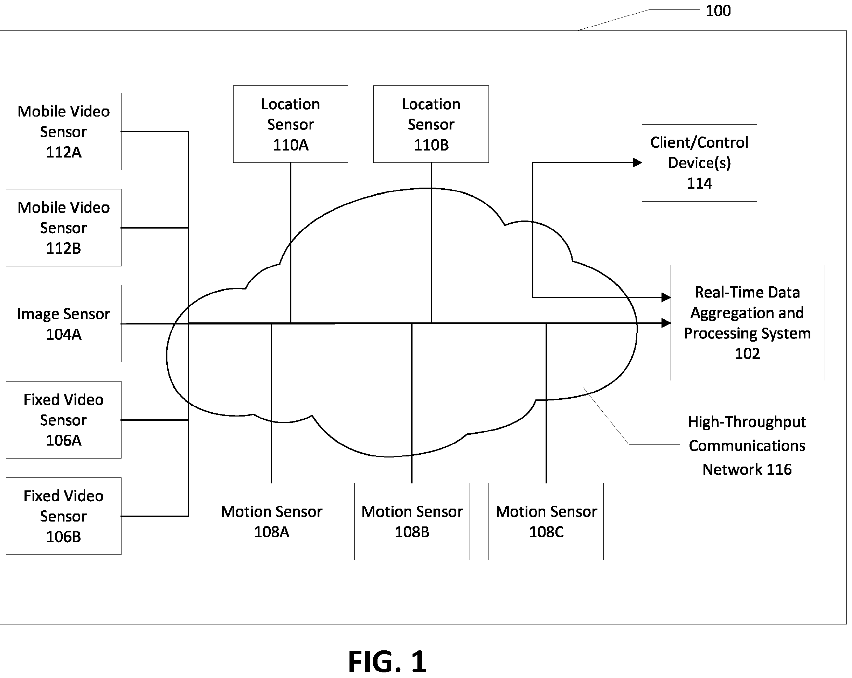

FIG. 1 illustrates a block diagram of a system that may be specially configured within which embodiments of the present disclosure may operate. Specifically, FIG. 1 depicts an example system 100 configured to enable improved object pathing for travelling objects within an environment. The system 100 includes a real-time data aggregation and processing system 102, one or more client/control device(s) 114, and any number of real-time sensors associated with a particular environment, for example image sensor 104A, fixed video sensors 106A-106B, mobile video sensors 112A-112B, motion sensor 108A-108C, and location sensors 110A-110B (collectively, 104A, 106A-106B, 112A-112B, 108A-108C, and 110A-110B referred to as "real-time sensors"). The real-time data aggregation and processing system 102 is communicable with one or more of the real-time sensors over a high-throughput communications network 116. Additionally or alternatively, in some embodiments, the real-time data aggregation and processing system 102 is communicable with the client/control device(s) 114 over the high-throughput communications network 116. In some other embodiments, the real-time data aggregation and processing system 102 is communicable with one or more of the client/control device(s) 114 over a communications network separate from the high-throughput communications network 116, for example where the separate communications network (not depicted) provides a lower bandwidth, throughput, and/or the like (e.g., a fourth generation cellular communications network). In this regard, the real-time data aggregation and processing system 102 may utilize the high-throughput communications network 116 to aggregate and/or receive real-time or near-real-time sensor data from the various real-time sensors, and may utilize a lower throughput communications network to output data updates to the client/control device(s) 114 in circumstances where such data updates are relevant to operations of the one or more of the client/control device(s) 114.

The real-time data aggregation and processing system 102 includes one or more computing device(s) embodied in hardware, software, firmware, and/or a combination thereof, that aggregates and processes a continuous set of sensor data from the real-time sensors associated with the particular environment. In some embodiments, the real-time data aggregation and processing system 102 includes one or more specially configured server(s). Additionally or alternatively, in some embodiments, the real-time data aggregation and processing system 102 includes one or more specially configured database(s). It will be appreciated that the real-time data aggregation and processing system 102 may be embodied entirely by one or more back-end computing systems, or in some embodiments may include one or more peripheral device(s), display(s), and/or other computing device(s) that enable direct or indirect user input, review, and/or other interaction.

The real-time data aggregation and processing system 102 may aggregate real-time sensor data automatically (e.g., in response to continuous transmission by each of the real-time sensors), or via requests to each of the real-time sensors. In some embodiments, the real-time data aggregation and processing system 102 determines data, circumstances, and/or events occurring or likely to occur in the future associated with the environment and/or travelling objects therein based on the continuous set of sensor data, for example congestion events, collision events, and/or the like, that are occurring now or indicated as likely to occur in future. In one example context, a collision event may embody a determination that two or more travelling object(s) have collided with one another in the environment, that a travelling object has collided with one or more portions of the environment (e.g., a piece of furniture, machinery, and/or the like), and/or that a travelling object has collided with one or more item(s) in the environment. The collision event may embody a permanent or temporary hazard within the environment, for example in a circumstance where the collision event causes immovability of travelling object(s) (e.g., due to damage), dropping of item(s) into traversable paths of the environment, permanent changes and/or damage to the environment, and/or the like. The congestion event may embody a determination that the environment includes one or more hazards, circumstances and/or the like that require slow movement and/or impede the throughput of travelling objects traversing around the environment.

In one example context, a congestion event embodies a temporary hazard caused by one or more environmental factors, such as spilled fluid within the environment causing a wet floor, a temporarily blocked path or portion of the environment, and/or the like. Additionally or alternatively, in some embodiments, the real-time data aggregation and processing system 102 generates updated data, such as optimized pathing data, for at least one travelling object in the environment. The real-time data aggregation and processing system 102 may generate such updated data based at least in part on data associated with the environment and/or objects retrieved from one or more datastores associated with the environment and/or objects, and/or determined from the continuous set of sensor data (e.g., current pathing data for one or more travelling object(s) within the environment, current location data for the one or more travelling object(s), and/or the like). Additionally or alternatively, in some embodiments, the real-time data aggregation and processing system 102 outputs updated data, such as optimized pathing data, to one or more computing devices associated with one or more travelling objects, for example one or more of the client/control device(s) 114.

The client/control device(s) 114 may include any number of computing device(s) and/or systems, each computing device or system associated with a particular travelling object within an environment. In this regard, the client/control device(s) 114 may include a control device for each of one or more instruction-controlled objects of the travelling object(s) within the environment. Additionally or alternatively, the client/control device(s) 114 may include a client device associated with each of one or more independently travelling objects of the travelling object(s) within the environment. In some embodiments, one or more independently travelling objects is not associated with a client device or control device (e.g., a human actor navigating through the environment for a goal not known or determinable by the real-time data aggregation and processing system 102).

In some embodiments, a client device of the client/control device(s) 114, and that is associated with a particular travelling object, includes one or more computing device(s) embodied in hardware, software, firmware, and/or a combination thereof, that provides functionality for depicting path(s) based on pathing data, performing one or more portion(s) of a task, identifying and/or scanning item(s) from within the environment, and/or the like. For example, in some embodiments the client device includes a specially configured user-facing mobile device, such as and without limitation a mobile phone, tablet, barcode scanner, laptop computer, personal computer, wearable device, or the like. The client device may be configured via a specially configured, running software application (e.g., an "app") on the client device that provides such functionality. The client device may receive user input, output audio, video, and/or other data to a user of the device, and/or otherwise enable user input/output to interact with received data, perform task(s), and/or the like. In one example context, a user may utilize the client device to follow a particular path within an environment as displayed via a client device until a destination location is reached, and perform a task within the environment utilizing the client device (e.g., identifying a particular item, scanning the particular item, and removing the particular item from the destination location within the environment). It will be appreciated that a plurality of travelling objects may each be associated with a different client device, each client device depicting different information based on the particular task to be performed by the associated travelling object as coordinated by a central system (e.g., the real-time data aggregation and processing system 102, and/or an associated system).

In some embodiments, a control device of the client/control device(s) 114, and that is associated with a particular travelling object, includes one or more computing devices embodied in hardware, software, firmware, and/or a combination thereof, that provides functionality for controlling movement, task performance, and/or other operations of the particular travelling object. For example, in some embodiments, the control device includes specially configured hardware, software, firmware, and/or a combination thereof of a mobile computer, an autonomous vehicle, an autonomous robot, an artificial intelligence machine, and/or the like. The control device may be configured by a specially configured, running software application (e.g., an "app") on the control device that provides such functionality. Non-limiting examples of a control device include a specially configured mobile terminal affixed to an instruction-controlled vehicle, autonomous vehicle perception and/or control system, mobile robot perception and/or control system, and/or the like.

The control device may receive updated data (e.g., optimized pathing data, an updated task process, and/or the like) and control operation of the travelling object based at least in part on the updated data. In one example context, the control device includes a computing device specially configured to cause an instruction-controlled object to automatically traverse throughout an environment based at least in part on optimized pathing data generated by a real-time data aggregation and processing system 102 and received by the control device associated with the particular instruction-controlled object. Additionally or alternatively, the control device may include a computing device specially configured to cause an instruction-controlled object to perform a particular task based on an updated task process.

Each of the location sensors 110A and 110B includes one or more computing devices embodied in hardware, software, firmware, and/or a combination thereof, that generate and/or provides a location data object for one or more objects within an environment (e.g., travelling objects, items, and/or the like). In some embodiments, each of the location sensors 110A and 110B includes or is embodied by computing device(s) that ping object(s) within the environment and generate location data for the object(s) based at least in part on data received in response to such a ping. For example, the location sensors 110A and 110B may each include a location beacon, a position sensor, a range detection sensor, and/or the like. Alternatively or additionally, in some embodiments, the location sensor(s) 110A and 110B communicate with each individual travelling object to retrieve location data associated with that individual travelling object from individual associated location sensor(s) of or associated with the individual travelling object (e.g., GPS sensors, local coordinate sensor(s) from an anchor point, and/or the like). The location data generated by each of the location sensors 110A and/or 110B may include GPS coordinate data, latitude/longitude data, localized location data, and/or the like. The location sensors 110A and 110B may each generate such location data for any number of objects within the environment. It will be appreciated that each of the location sensors 110A and 110B may generate, store, and/or communicate location data for differing subsets of objects within the environment. For example, each of the location sensors 110A and 110B may generate, store, and/or communicate location data for travelling objects most proximate to it as opposed to the other location sensor.

Each of the motion sensors 108A, 108B, and 108C includes one or more computing devices embodied in hardware, software, firmware, and/or a combination thereof, that generate and/or provide motion data for travelling objects within an environment. In some embodiments, each of the motion sensors 108A, 108B, and 108C includes or is embodied by computing device(s) that produce signal waves within the environment and generate data indicating whether such signal waves were determined to return to the computing device (e.g., due to bouncing off moving objects within the environment. Non-limiting examples of the motion sensors 108A, 108B, and/or 108C include an ultrasonic motion sensor, a radio frequency motion sensor, an infrared motion sensor, and/or the like. Each of the motion sensors 108A, 108B, and/or 108C may generate and/or output data indicating whether motion was detected within the environment by the respective motion sensor. It will be appreciated that each of the motion sensors 108A, 108B, and/or 108C may generate, store, and/or communication motion data corresponding to travelling objects that enter the field of view of the respective motion sensor.

The image sensor 104A includes one or more computing devices embodied in hardware, software, firmware, and/or a combination thereof, that captures image data objects representing a captured portion of the environment. The image sensor 104A may communicate captured image data to one or more external systems, such as the real-time data aggregation and processing system 102. In some embodiments, the image sensor 104A includes or is embodied by CMOS sensor(s) and/or CCD sensor(s), lens(es) and/or other optical components, activation hardware, illumination component(s), and/or the like, that generate an image data object based on light rays incident on the image sensor. Non-limiting examples of an image sensor 104A include a color camera, a grayscale camera, a 360 camera, and the like. It will be appreciated that the image sensor 104A may be fixed (e.g., affixed within the environment at a particular position, such that the image sensor 104A cannot move or can only rotate, pan, and/or tilt) or mobile (e.g., attached to a manually controlled or autonomous vehicle, such as a travelling object, within the environment).

Each of the fixed video sensors 106A and 106B includes one or more computing devices embodied in hardware, software, firmware, and/or a combination thereof, that capture video data representing a captured portion of the environment from a fixed position. The fixed video sensors 106A and/or 106B may communicate captured video data to one or more external systems, such as the real-time data aggregation and processing system 102. The fixed video sensors 106A and 106B may be affixed at a particular position within the environment such that the fixed video sensor 106A and/or 106B may not move at all, or may pan, tilt, and/or zoom within the environment. In some embodiments, each of the fixed video sensors 106A and 106B may capture multiple frames of image data objects embodying the video data. Such video data may include color video data, grayscale video data, and/or the like. Non-limiting examples of fixed video sensors 106A and 106B include CMOS video cameras, CCD video cameras, closed circuit television cameras, and/or the like.

Each of the mobile video sensors 112A and 112B includes one or more computing devices embodied in hardware, software, firmware, and/or a combination thereof, that captures video data representing a captured portion of the environment from a dynamic position. The mobile video sensors 112A and 112B may similarly communicate captured video data to one or more external systems, such as the real-time data aggregation and processing system 102. The mobile video sensors 112A and 112B may be included in, attached to, or otherwise move together with a travelling object. For example, the mobile video sensor 112A and/or the mobile video sensor 112B may be embodied as a part of, attached to, or otherwise move together with a client device associated with a travelling object, the travelling object itself, an autonomous vehicle on which a user is riding, and/or the like. It will be appreciated that in some embodiments, the mobile video sensor 112A and/or 112B may rotate, pan, tilt, and/or zoom from a particular position at which the respective mobile video sensor is affixed to or otherwise associated with a corresponding travelling object. Such video data may include color video data, grayscale video data, and/or the like. Non-limiting examples of a mobile video sensor 112A and/or 112B include CMOS video cameras, CCD video cameras, video cameras built-in to a client device, travelling object, or vehicle associated therewith, and/or the like.

The high-throughput communications network 116 may embody any of a myriad of high-throughput, high-bandwidth, and/or otherwise high-transmission rate network configurations. In some embodiments, a high-throughput communications network 116 includes any number of computing devices embodying a 5G network. The high-throughput communications network 116 enables continuous and/or real-time communication between the real-time sensors and the data aggregation and processing system 102, and/or in some embodiments between the client/control device(s) 114. For example, in some embodiments, the high-throughput communications network 116 includes one or more base station(s), relay(s), router(s), relay(s), switch(es), cell tower(s), communication cable(s), routing station(s), and/or the like. The high-throughput communications network 116 may include a plurality of network access points and/or relay points that are proximate to one another to facilitate high-fidelity transport of high frequency transmissions over a shorter range than non-high-throughput communications networks. In some embodiments, the real-time data aggregation and processing system 102 communicates with the client/control device(s) 114 over a non-high-throughput communications network having lower throughput, higher latency, and/or the like, and that may function over a larger range.

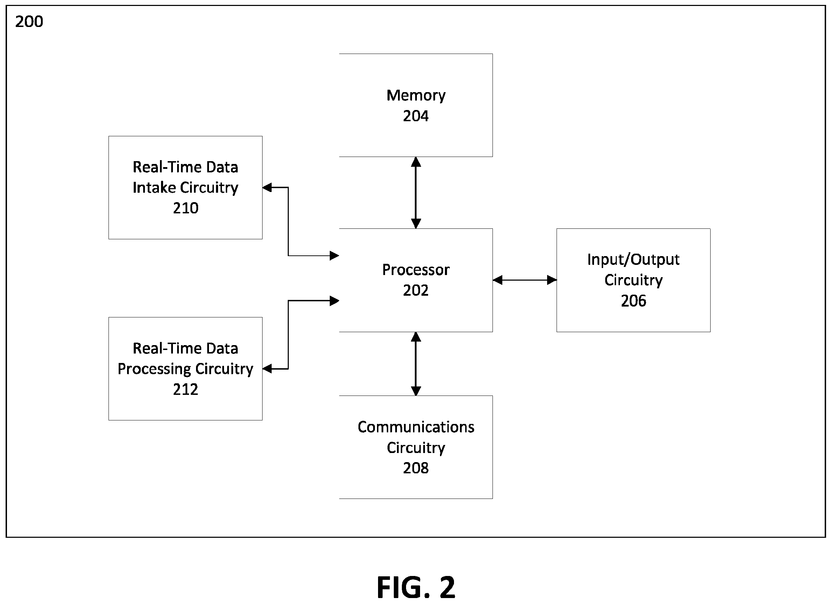

FIG. 2 illustrates a block diagram of an example real-time pathing apparatus that may be specially configured in accordance with at least some example embodiments of the present disclosure. In some embodiments, the real-time data aggregation and processing system 102 is embodied by one or more computing device(s), such as the real-time pathing apparatus 200 as depicted and described in FIG. 2. The real-time pathing apparatus 200 includes a processor 202, a memory 204, input/output circuitry 206, communications circuitry 208, real-time data intake circuitry 210, and real-time data processing circuitry 212. The real-time pathing apparatus 200 may be configured, using one or more of the sets of circuitry 202, 204, 206, 208, 210, and/or 212, to execute the operations described herein.

Although components are described with respect to functional limitations, it should be understood that the particular implementations necessarily include the user of particular computing hardware. It should also be understood that certain of the components described herein may include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the real-time pathing apparatus 200 may provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) may be in communication with the memory 204 via a bus for passing information among components of the real-time pathing apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the real-time pathing apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" may be understood to include a single core processor, a multi-core processor, multiple processors internal to the real-time pathing apparatus 200, and/or one or more remote or "cloud" processor(s) external to the real-time pathing apparatus 200.

In an example embodiment, the processor 202 may be configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 may represent an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions may specifically configure the processor 202 to perform the algorithms embodied in the specific operations described herein when such instructions are executed.

As one particular example, the processor 202 may be configured to perform various operations associated with real-time, continuous data aggregating and/or processing for environment monitoring and/or data updating (e.g., for generating optimized pathing data for one or more travelling objects within the environment based at least in part on the collected and/or aggregated data), for example as described with respect to operation of the real-time data aggregation and processing system 102 and/or as described further herein. In some embodiments, the processor 202 includes hardware, software, firmware, and/or a combination thereof, that receives, retrieves, and/or otherwise collects and aggregates, in real-time or near-real-time to the time such data is captured, a continuous set of sensor data from any number of real-time sensors. Additionally or alternatively, in some embodiments, the processor 202 includes hardware, software, firmware, and/or a combination thereof, that processes the continuous set of sensor data to determine one or more events, statuses, or events associated with the environment based at least in part on said continuous set of sensor data. Additionally or alternatively, in some embodiments, the processor 202 includes hardware, software, firmware, and/or a combination thereof, that detects travelling objects based at least in part on the continuous set of sensor data, and/or data associated with said travelling objects. Additionally or alternatively, in some embodiments, the processor 202 includes hardware, software, firmware, and/or a combination thereof, that generates updated data associated with one or more travelling object(s) within an environment, for example based at least in part on the continuous set of sensor data and/or data identified as associated with such travelling object(s). For example, the processor 202 may generate optimized pathing data for one or more travelling objects. Additionally or alternatively, in some embodiments, the processor 202 includes hardware, software, firmware, and/or a combination thereof, that updates one or more task process(es) associated with the one or more travelling objects within the environment. Additionally or alternatively, in some embodiments, the processor 202 includes hardware, software, firmware, and/or a combination thereof, that outputs updated data to one or more computing device(s) associated with at least one travelling object of the one or more travelling objects. Additionally or alternatively, in some embodiments, the processor 202 includes hardware, software, firmware, and/or a combination thereof that receives, retrieves, and/or maintains a task operation and/or task process associated with each of one or more travelling object(s), and/or transmits data associated with such a task operation and/or task process to the travelling object(s) and/or a client device associated therewith. Additionally or alternatively, in some embodiments, the processor 202 includes hardware, software, firmware, and/or a combination thereof that retrieves and/or maintains associations between one or more traveling data object(s) and a task operation (or a task process) assigned to each of the one or more travelling object(s).

In some embodiments, the real-time pathing apparatus 200 includes input/output circuitry 206 that may, in turn, be in communication with processor 202 to provide output to the user and, in some embodiments, to receive an indication of a user input. The input/output circuitry 206 may comprise one or more user interface(s) and may include a display that may comprise the interface(s) rendered as a web user interface, an application user interface, a user device, a backend system, or the like. In some embodiments, the input/output circuitry 206 may also include a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a client device and/or other display associated with a user.

The communications circuitry 208 may be any means such as a device or circuitry embodied in either hardware or a combination of hardware and software that is configured to receive and/or transmit data from/to a network and/or any other device, circuitry, or module in communication with the real-time pathing apparatus 200. In this regard, the communications circuitry 208 may include, for example, a network interface for enabling communications with a wired or wireless communication network. For example, the communications circuitry 208 may include one or more network interface card(s), antenna(s), bus(es), switch(es), router(s), modem(s), and supporting hardware, firmware, and/or software, or any other device suitable for enabling communications via one or more communication network(s). Additionally or alternatively, the communications circuitry 208 may include circuitry for interacting with the antenna(s) and/or other hardware or software to cause transmission of signals via the antenna(s) or to handle receipt of signals received via the antenna(s). In some embodiments, the communications circuitry 208 enables transmission of data (e.g., to a control device, client device, and/or other computing device associated with a travelling object) and/or receipt of data (e.g., real-time, continuous sensor data from one or more real-time sensors) in communication with the real-time pathing apparatus 200.

The real-time data intake circuitry 210 includes hardware, software, firmware, and/or a combination thereof, that supports various functionality associated with aggregating real-time and/or continuous streams of sensor data from one or more real-time sensors associated with an environment. In some embodiments, the real-time data intake circuitry 210 includes hardware, software, firmware, and/or a combination thereof, that receives a continuous set of sensor data from any number of real-time sensors. In some such embodiments, the real-time data intake circuitry 210 may include and/or utilize a high-throughput communications network to intake new sensor data embodying some or all of the continuous set of sensor data. The continuous set of sensor data may include any number of subsets, for example each subset associated with a particular real-time sensor of the real-time sensors. It will be appreciated that the continuous set of sensor data may include various subsets including different sensor data types, for example one or more subsets including video data, one or more subsets including motion sensor data, one or more subsets including captured image data, and/or the like. Additionally or alternatively, in some embodiments, the real-time data intake circuitry 210 includes hardware, software, firmware, and/or a combination thereof, for maintaining a buffer embodying the continuous set of real-time sensor data as new sensor data is received from each of one or more real-time sensor(s) via a high-throughput communications network. It will be appreciated that, in some embodiments, real-time data intake circuitry 210 may include a separate processor, specially configured field programmable gate array (FPGA), or a specially programmed application specific integrated circuit (ASIC).

The real-time data processing circuitry 212 includes hardware, software, firmware, and/or a combination thereof, that supports various functionality associated with processing sensor data received in real-time, such as a continuous set of sensor data collected and/or aggregated via one or more real-time sensors associated with an environment. In some embodiments, the real-time data processing circuitry 212 processes the sensor data retrieved and/or otherwise received in real-time (e.g., a continuous set of sensor data received over a high-throughput communications network) that represents real-time information representing circumstances within a particular environment. The real-time data processing circuitry 212 may process such sensor data to determine one or more circumstances, aspects, and/or situations occurring within or otherwise associated with the environment, generate updated data associated with objects therein, perform one or more determinations based on the sensor data, and/or the like. In some embodiments, the real-time data processing circuitry 212 includes hardware, software, firmware, and/or a combination thereof that maintains and/or accesses map data representing an environment, and/or that identifies available and/or expected portion(s) of an environment along which a travelling object may traverse.

In some embodiments, the real-time data processing circuitry 212 includes hardware, software, firmware, and/or a combination thereof, for determining occurrence or likely future occurrence of one or more event(s), circumstance(s), and/or scenarios within an environment based at least in part on the continuous set of sensor data. In some embodiments, the real-time data processing circuitry 212 includes hardware, software, firmware, and/or a combination thereof, for determining a collision event is occurring or will occur within an environment at a future timestamp. In some embodiments, the real-time data processing circuitry 212 includes hardware, software, firmware, and/or a combination thereof, for determining a congestion event is occurring or will occur within an environment at a future timestamp. It will be appreciated that the continuous set of sensor data may be processed to determine any of a myriad of events, circumstances, scenarios, and/or the like therefrom.

Additionally or alternatively, in some embodiments, the real-time data processing circuitry 212 includes hardware, software, firmware, and/or a combination thereof, for identifying current data associated with one or more travelling objects in or otherwise associated with an environment. In some such embodiments, the real-time data processing circuitry 212 includes hardware, software, firmware, and/or a combination thereof, for identifying data associated with one or more travelling objects based on the continuous set of sensor data, stored data, and/or the like, or a combination thereof. For example, in some embodiments the real-time data processing circuitry 212 identifies a current location, current pathing data, and/or a current task process associated with a particular travelling object identified in the current set of sensor data and/or otherwise associated with a particular environment. Additionally or alternatively, in some embodiments, the real-time data processing circuitry 212 includes hardware, software, firmware, and/or a combination thereof, for generating updated data associated with one or more travelling object(s) based at least in part on the continuous set of sensor data. For example, in some embodiments, the real-time data processing circuitry 212 includes hardware, software, firmware, and/or a combination thereof, for generating optimized pathing data for at least one travelling object, an updated task process for at least one travelling object, and/or the like. Additionally or alternatively, in some embodiments, the real-time data processing circuitry 212 includes hardware, software, firmware, and/or a combination thereof, for outputting updated data to one or more computing devices associated with at least one travelling object. The updated data may cause any number of operational changes to occur or otherwise be performed by the travelling object. It will be appreciated that, in some embodiments, real-time data processing circuitry 212 may include a separate processor, specially configured field programmable gate array (FPGA), or a specially programmed application specific integrated circuit (ASIC).

Additionally or alternatively, in some embodiments, one or more of the sets of circuitries 202-212 are combinable. Alternatively or additionally, in some embodiments, one or more of the sets of circuitry perform some or all of the functionality described associated with another component. For example, in some embodiments, one or more of the sets of circuitry 202-212, such as the real-time data intake circuitry 210 and the real-time data processing circuitry 212, are combined into a single module embodied in hardware, software, firmware, and/or a combination thereof. Similarly, in some embodiments, one or more of the sets of circuitry, for example real-time data intake circuitry 210 and/or real-time data processing circuitry 212 is combined such that the processor 202 performs one or more of the operations described above with respect to each of these modules.

### Example Environments of the Disclosure

Having described example systems and apparatuses in accordance with the present disclosure, example visualizations of environments within which embodiments of the present disclosure may operate will now be discussed. The depicted environments may include or be associated with any number and/or type of real-time sensors, and similarly may include and/or be associated with any number and/or type of travelling objects. It will further be appreciated that the environments within which embodiments of the present disclosure operate may include and/or be associated with types of travelling object(s) and/or real-time sensors that differ from those depicted and described. In this regard, the specific environment visualizations depicted and described herein should not limit the scope or spirit of this disclosure.

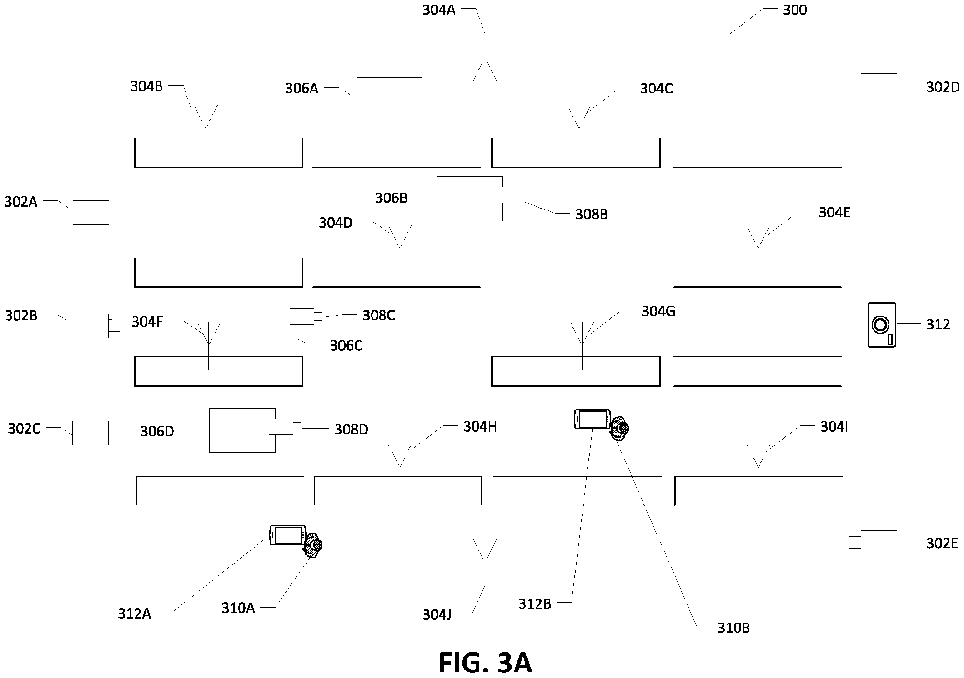

FIG. 3A illustrates a visualization of an example environment within which real-time sensor data is aggregated and processed in accordance with at least some example embodiments of the present disclosure. Specifically, FIG. 3A depicts a visualization of an example environment 300 within which a plurality of travelling objects operate. In one example context, the environment 300 embodies a warehouse environment within which one or more travelling object(s) perform and/or facilitate performance of item picking operations (e.g., item identification, selection, repositioning, and/or removal from the environment 300). It will be appreciated that embodiments described herein may provide advantages within any of a myriad of environments. Accordingly, the specific environments depicted and described with respect to FIG. 3A should not limit the scope or spirit of this disclosure.

The environment 300 may include any of a myriad of sub-components. For example, the environment 300 may include one or more objects located throughout in a fixed position, or that are otherwise not intended to be moved. Non-limiting examples of such objects include furniture pieces, warehouse shelving units, conveyor belts, machinery, and/or the like. Additionally or alternatively, the environment 300 may include one or more items at one or more locations throughout. The items may embody products, goods, and/or other objects with which travelling objects may interact within the environment 300, such as to perform one or more particular task operation(s). In one example context, the items in the environment 300 are pickable for extraction from the environment 300, pickable for movement to a different location within the environment 300, pickable for packaging and shipping from the environment 300 to another location, and/or the like. In this regard, it will be appreciated that the environment 300 may include any number of components (e.g., fixed objects, travelling objects, items, machinery, furniture, and/or the like) that facilitate performance of task operation(s) intended to be performed within the environment 300.

Environment 300 further includes a plurality of networking devices 304A-304J. The plurality of networking devices 304A-304J embody at least a portion of a high-throughput communications network that is accessible to communicate data between any of a myriad of devices in or associated with the environment 300. For example, in some embodiments, the high-throughput communications network embodied by the plurality of networking devices 304A-304J facilitates transmission of a real-time, continuous set of sensor data from each of a myriad of real-time sensors within the environment 300 to a real-time data aggregation and processing system (not depicted) associated with the environment 300. In some embodiments, for example, the real-time sensors transmit sensor data to a real-time data aggregation and processing system 102 embodied by the real-time pathing apparatus 200, where the real-time data aggregation and processing system 102 is located within the environment 300, proximate to the environment 300 (e.g., in a separate room, building, and/or other location within a particular threshold distance from the environment 300), and/or in a remote, non-proximate location facilitated by one or more additional networking device(s) embodying the high-throughput communications network. In some example contexts, the plurality of networking devices 304A-304J facilitate transmission of a continuous set of sensor data in real-time to a real-time data aggregation and processing system 102 on-premises with respect to the environment 300. In other example contexts, the plurality of networking devices 304A-304J facilitate transmission of a continuous set of sensor data in real-time to a real-time data aggregation and processing system 102 embodied as a cloud-based system providing such functionality as depicted and described with respect to the data aggregation and processing system 102.

Each of the plurality of networking devices 304A-304J may be affixed in any of a myriad of manners within the environment 300. For example, in some embodiments, one or more of the plurality of networking devices 304A-304J may be affixed, either temporarily or permanently, to static or generally non-moving portions of the environment 300 (e.g., a wall, a ceiling, large tiered shelving objects, machinery, and/or the like). Additionally or alternatively, in some embodiments, one or more of the plurality of networking devices 304A-304J may be affixed, either temporarily or permanently, to moving objects within the environment 300 (e.g., a travelling object, a portion of a robot, a moving element of a piece of machinery, and/or the like). The environment 300 may include any amount of networking devices arranged within the environment 300 to sufficiently provide high-throughput communication network services at all desired locations within the environment 300. The plurality of networking devices 304A-304J may function in tandem to provide data transmission, relaying, and/or other communication throughout the environment 300.

The environment 300 further includes a plurality of travelling objects. The travelling objects may operate within the environment 300 to perform any of a myriad of action(s). In some embodiments, for example, one or more of the travelling object(s) traverse throughout the environment 300 to perform one or more task operations of a task process currently assigned to the travelling object. Alternatively or additionally, in some embodiments, the travelling object(s) traverse throughout the environment 300 to perform any of a myriad of independent action(s), for example to traverse through the environment 300 to another environment, inspect the environment 300 for issues within the environment 300, and/or the like.

An environment may include any number of travelling objects, each of which may be the same type of travelling object or a different type of travelling object. Non-limiting examples of such types of travelling objects include independently travelling object(s) (e.g., human actors operating, statically operating automatic machinery, and/or the like), instruction-controlled object(s) (e.g., autonomous vehicles, robots, remote controlled system, sand/or the like), and the like. It will be appreciated that in some contexts, an environment may include entirely a single type of travelling object (e.g., an entirely autonomous warehouse), and in other contexts an environment includes a plurality of travelling objects of a plurality of types. For example, as illustrated, the environment 300 includes a plurality of instruction-controlled objects 306A-306D and a plurality of independently travelling objects 310A-310B. In some embodiments, the plurality of instruction-controlled objects 306A-306D are embodied by various autonomous vehicles controlled at least in part by instructions based at least in part on real-time sensor data, for example the instructions received from a real-time data aggregation and processing system. Such instructions may cause the instruction-controlled objects 306A-306D to traverse along a particular path (e.g., automatically move along a specific path or generally towards one or more target location(s)), perform particular task operation(s) (e.g., automatically identifying, picking, removing, and/or otherwise interacting with item(s) in the environment 300), and/or the like.

Additionally or alternatively in some embodiments, the plurality of independently travelling objects 310A-310B are embodied by human actors, where such human actors perform and/or otherwise follow instructions displayed via one or more associated client devices, for example where such instructions are received from a real-time data aggregation and processing system and such instructions are based at least in part on real-time sensor data. As illustrated, for example, the independently travelling object 310A is associated with a first client device 312A and the independently travelling object 310B is associated with a second client device 312B. Such client devices 312A and 312B may each embody user-facing devices that render user interface(s) based on such instructions received from a real-time data aggregation and processing system. For example, the user interface(s) may depict a path along which the associated independently travelling object is to traverse, an item the independently travelling object is to pick from the environment, and/or other information for use by the independently travelling object to complete a task operation. Alternatively or additionally, in some embodiments, the client devices 312A and/or 312B each embody user-facing devices that output audio signals based on instructions received from a real-time data aggregation and processing system. For example, the first client device(s) 312A may output audio signals indicating a direction independently travelling object 310A is to travel based at least in part on optimized pathing data received associated with said independently travelling object 310A. Similarly, the second client device 312B may output audio signals indicating a direction that independently travelling object 310B is to travel based at least in part on optimized pathing data received associated with said independently travelling object 310B.

In some embodiments, one or more travelling object(s) within an environment are each associated with a data profile. A data profile may be uniquely associated with a particular travelling object, device, user and/or the like, and may include or be associated with data corresponding to the operation of the associated travelling object. For example, in some embodiments, a data profile includes or is associated with a unique identifier, such that the unique identifier may be utilized to identify the travelling object and/or a particular device associated therewith (e.g., a client device used by the travelling object). In some embodiments, the data profile includes or is associated with captured sensor data, data corresponding to task operation(s) currently and/or previously assigned to the travelling object, data embodying operations performed associated with one or more currently or previously assigned task operation(s), and/or the like.

For example, in some embodiments, the data profile includes or is associated with voice template data for an independently travelling object (e.g., a user utilizing a client device to perform various task operations within an environment). In some embodiments, the voice template data indicates a particular voice template that facilitates recognition of audio instructions via a device associated with the travelling object (e.g., a human actor in the environment utilizing a client device) while the travelling object performs one or more task operation(s). In some embodiments, the voice template embodies a trained model, system, or application that specifically recognizes audio commands input by a user (e.g., by a human actor speaking said audio commands). Each voice template may be specially trained to accurately detect and/or process audio commands input by a particular user. For example, in some embodiments, a particular voice template is trained by having a corresponding user to which the voice template is associated speak one or more particular word(s), phrase(s), sentence(s), and/or the like during a training or calibration phase, such that the particular voice template facilitates detection of such audio input patterns specific to the particular user. In this regard, such voice templates advantageously perform with improved accuracy in high-noise environments, where other audio data from other user(s), machinery, and/or other elements of the environment may similarly be captured and/or detected. In some such embodiments, particular voice template data corresponding to a particular voice template is loaded onto a client device based at least in part on a portion of the data profile indicating an identity of the user. In some such embodiments, once voice template data embodying a particular voice template is identified, the voice template may be used for detecting and/or processing audio input data, for example to process audio commands input (e.g., spoken into a microphone) received by the client device of a user embodying the travelling object. In some embodiments, the audio input received and/or processed by the client device of a travelling object embodies one portion of real-time, continuous sensor data processable as described herein (e.g., which provides context to the state of the environment).

In some embodiments, a client device associated with a user (e.g., a travelling object in an environment) receives and validates user authentication credentials to identify a data profile that uniquely identifies the user, and loads particular voice template data corresponding to the user from a central system based on the identified data profile. Alternatively or additionally, in some embodiments, a device (e.g., a client device) is predetermined as associated with a particular data profile (e.g., in a circumstance where each user is assigned a particular client device), such that the device may load particular voice template data based on the predetermined data profile. It will be appreciated that, in some embodiments, each client device stores and/or otherwise maintains a plurality of voice template data corresponding to a plurality of voice templates, and loads a particular voice template from storage once a user is identified (e.g., via user authentication credentials or in a predefined manner, for example).

In some embodiments, a data profile and/or particular unique identifier associated therewith is detectable and/or transmittable together with one or more portion(s) of data associated with the corresponding travelling object. For example, in some embodiments a data profile identifier is determined from one or more real-time sensor(s) that interrogate the travelling object and/or an associated device as it traverses near and/or through a particular area monitored by the real-time sensor(s). Alternatively or additionally, in some embodiments where the travelling object captures or is associated with one or more device(s) that capture real-time sensor data, the transmissions of real-time sensor data may include or be transmitted in conjunction with a data profile identifier that identifies the travelling object that captured such data. In some embodiments, the data profile identifier embodies a device identifier (e.g., a unique identifier of a travelling object, a device IMEI, a network identifier, and/or the like).

The environment 300 further includes a plurality of real-time sensors. The real-time sensors provide real-time sensor data that assists in monitoring a status of the environment 300, detecting scenarios, events, and/or other aspects of the environment 300, determining a status associated with a particular travelling object within the environment 300, controlling travelling objects within the environment 300, and/or otherwise assists in performing any of a myriad of desired data-driven process(es). In one example context, the plurality of real-time sensors provide real-time sensor data for use in generating pathing data representing path(s) to be followed by one or more travelling objects within the environment 300, where the path(s) enable ongoing operation and/or efficiency of tasks performed within the environment 300.

In some embodiments, the real-time sensors include any of a myriad of sensor types, each sensor type capable of capturing a different type of sensor data. Non-limiting examples of such sensor types including real-time image sensors, real-time video sensors, real-time motion sensors, real-time range sensors, real-time LiDAR sensors, real-time location sensors, real-time RFID sensors, and/or the like. Each of these sensors may capture image data (e.g., still images, video frames, and/or the like), video data, motion data, range data, LiDAR data, location data, RFID data, and/or the like from within the environment. The various types of real-time sensor data provide context to aspects of the operations within the environment 300. Each of the real-time sensors may transmit real-time sensor data to the real-time data aggregation and processing system continuously, such that the real-time data aggregation and processing system 102 receives a continuous set of sensor data including the sensor data from each real-time sensor over time for further processing. In this regard, based at least in part on the continuously updated real-time sensor data, the data aggregation and processing system may perform real-time, up-to-date determinations and/or process(es) depending on such data. For example, the real-time aggregation and processing system may receive a continuous set of sensor data and utilize such data to perform one or more determination(s) regarding the status, events, and/or aspects of the environment 300, update data based at least in part on such real-time sensor data (e.g., generate optimized pathing data, updated task processes, and/or the like), and/or the like.

The plurality of real-time sensors may be positioned at various locations throughout the environment 300, including without limitation affixed either permanently or temporarily to static objects in the environment 300, affixed to travelling objects in the environment 300, embodied as a component of a travelling object, and/or the like. For example, as illustrated, the environment 300 includes a plurality of fixed video sensors 302A, 302B, and 302C affixed along the left wall in the depicted visualization, and a plurality of fixed video sensors 302D and 302E together with a fixed image sensor 312 affixed along the right wall in the depicted visualization. These fixed real-time sensors may remain in a known location and capture particular sensor data representing a particular aspect of the environment 300 within a particular area monitored by the respective real-time sensor. In some embodiments, one or more of the fixed real-time sensors may pan, tilt, zoom, and/or otherwise rotate orientation and/or adjust the monitored location within the environment without altering the location at which the real-time sensor is positioned.

In some embodiments, collected sensor data is stored associated with additional data comprising one or more data identifiers, data determined from and/or associated with the real-time sensor that captured the data, and/or the like, for example by a real-time data aggregation and processing system. The additional data may provide additional context regarding the sensor data. For example, in some embodiments, collected sensor data is stored associated with data identifier(s) that uniquely identify the real-time sensor that was used to capture that sensor data. Additionally or alternatively, in some embodiments, the collected sensor data is stored associated with location data object(s) that indicate the location of the real-time sensor that captured the sensor data, and/or data indicating a portion of the environment with which the sensor data is associated. In this regard, the location data object(s) may define or otherwise indicate a monitored area of the environment that corresponds to the sensor data, where such a monitored area remains consistent (e.g., in the context of a fixed real-time sensor) or is dynamic (e.g., in the context of a mobile real-time sensor). It will be appreciated that, in this regard, the real-time data aggregation and processing system may retrieve and/or receive sensor data associated with a particular area within an environment to determine a particular status indicator for that particular area, where the particular status indicator identifies whether an event is occurring in the particular area, has occurred within the particular area and was resolved, or another aspect of the particular area. Additionally or alternatively, in some embodiments, sensor data is stored associated with a timestamp, or a plurality of timestamps, that identify the time at which the sensor data was collected and/or otherwise is relevant. In this regard, the real-time data processing and aggregation system processes the timestamp data to identify changes over time in one or more areas of an environment, for example as mobile real-time sensors collect sensor data associated with such areas that may not otherwise be monitored consistently. Additionally such timestamped sensor data may be stored and retrieved for determining and/or otherwise analyzing change(s), trend(s), pattern(s), and/or the like in an environment, or a portion thereof, over time. In some embodiments, the real-time data processing and aggregation system stores and subsequently retrieves such historical sensor data and/or additional data to perform any of such determinations, other determinations associated with a particular area and/or time, and/or any of a myriad of other defined purposes.

Additionally as illustrated, the environment 300 includes a plurality of mobile video sensors affixed to various travelling objects, such as the mobile video sensor 308B affixed to the travelling object 306B, the mobile video sensor 308C affixed to the travelling object 306C, and the mobile video sensor 308D affixed to the travelling object 306D. It will be appreciated that such travelling objects may include any number of additional and/or alternative sensors, for example LiDAR sensors, range sensors, and/or the like that assist in enabling perception and/or autonomous movement of the travelling object, detecting of real-time sensor data associated with the environment 300, and/or the like. The location at which a particular mobile real-time sensor is positioned is not predetermined, and/or otherwise may not be known to a real-time data aggregation and processing system. In some embodiments, the location of a particular mobile real-time sensor is determinable by a real-time data aggregation and processing system, for example through requesting the location from the real-time sensor, determining the location based on location data associated with another object (e.g., an associated travelling object), processing of sensor data captured via the real-time sensor, and/or the like.

In some embodiments, an environment includes only real-time sensors fixedly attached to travelling objects within the environment and/or client devices associated with such travelling objects. For example, with respect to the environment 300, in some embodiments an environment only includes various real-time sensors onboard, affixed to, and/or otherwise included in or with the travelling objects 306A, 306B, 306C, and 306D. Such an example context may embody a fully autonomous warehouse environment, where autonomous vehicles, robots, and/or the like, leverage onboard real-time sensors (e.g., video sensors, LiDAR sensors, and/or the like) to provide data used for determining aspects, scenarios, events, and/or other status(es) of the environment within which such travelling objects are operating. Additionally or alternatively, in some embodiments, client device(s) and/or real-time sensor(s) fixedly attached to one or more independently travelling objects (e.g., wearables) are further utilized to capture real-time sensor data from within the environment being monitored.

Additionally or alternatively, in some embodiments, client device(s) associated with one or more travelling object(s) include or embody one or more real-time sensors that provide sensor data to a real-time data aggregation and processing system. The client device(s) may include or embody any number of mobile real-time sensor(s) moved by and/or along with a corresponding travelling object. For example, a travelling object embodying a human actor carrying a client device may move the client device throughout the environment 300 as the human actor performs one or more task operations based on a current task process associated with the human actor and/or traverses along a path based on pathing data generated associated with the human actor. As illustrated for example, the client device 312A associated with the travelling object 310A and/or the client device 312B associated with the travelling object 310B may each embody or include a mobile image sensor, video sensor, location sensor, and/or the like, that captures and/or transmits such corresponding sensor data in real-time to a real-time aggregation and processing system.

Sensor data associated with the environment 300 may be processed based on any of a myriad of desired goal determination(s), process(es), and/or the like. In some embodiments, a real-time data aggregation and processing system aggregates and/or processes sensor data to generate pathing data for a particular travelling object to travel to reach a target location (e.g., based on a task operation assigned to the particular travelling object), and/or generate a plurality of pathing data corresponding to a plurality of travelling objects. Additionally or alternatively, in some embodiments, the real-time data aggregation and processing system aggregates and/or processes sensor data to perform a plurality of goal determination(s), process(es), and/or the like. For example, in some embodiments, the real-time data aggregation and processing system processes sensor data to identify and/or flag event(s), scenario(s), and/or aspects of the environment additionally or alternatively to generating pathing data. In some embodiments, the real-time data aggregation and processing system generates optimized pathing data that avoids a particular event, circumstance, scenario, and/or the like, that paths a travelling object sufficiently close to a detected event at a particular location to gather new sensor data for processing (e.g., to determine if the event remains, has been resolved, and/or the like), and/or that paths one or more travelling object(s) to a detected event at a particular target location to perform one or more operation(s) to resolve the event.

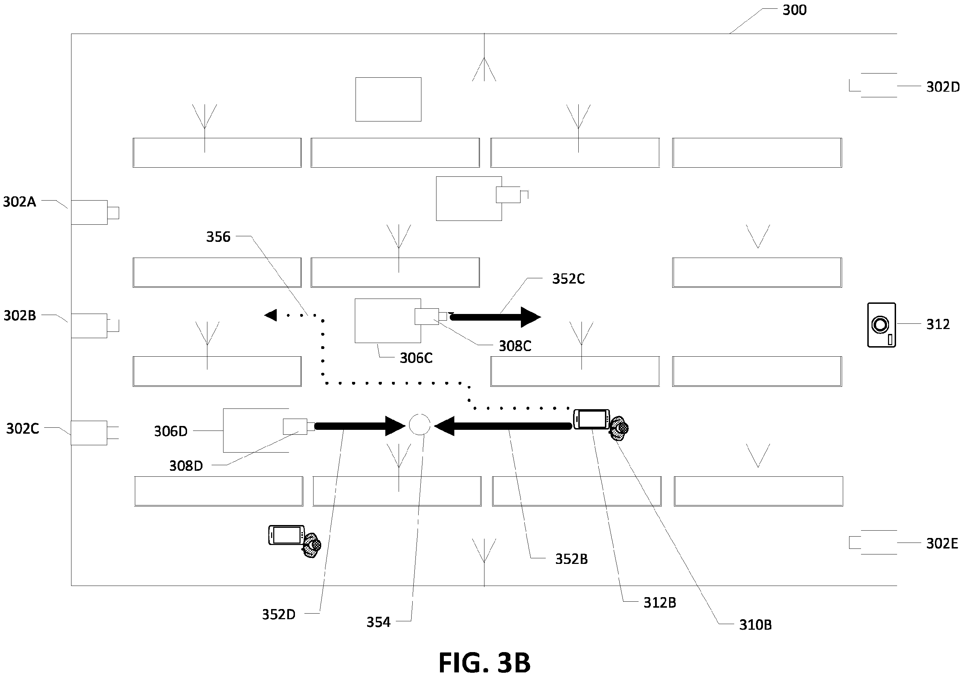

FIG. 3B illustrates a visualization of optimized pathing data generated for travelling objects based at least in part on captured real-time sensor data in accordance with at least some example embodiments of the present disclosure. Specifically, FIG. 3B illustrates a visualization of optimized pathing data generated based at least in part on the real-time sensor data aggregated and processed for the example environment 300 as depicted and described with respect to FIG. 3A. It will be appreciated that, as described herein, the particular sensor data processed and optimized pathing data depicted and described is exemplary and, in other contexts and in other embodiments, the particular sensor data aggregated and/or processed by such embodiments and/or the optimized pathing data generated by such embodiments may differ. Accordingly, the particular visualization depicted and described with respect to FIG. 3B is exemplary and should not limit the scope or spirit of this disclosure.

As depicted in FIG. 3B, the various travelling objects are associated with current pathing data representing a path along which the travelling object is to traverse. For example, the travelling object 306D is associated first current pathing data representing the path 352D, the travelling object 306C is associated with second current pathing data representing the path 352C, and the travelling object 310B is associated with third current pathing data representing the path 352B. The current pathing data associated with each of the travelling objects may have been previously generated by one or more systems, such as a real-time data aggregation and processing system. Such current pathing data may have been generated based at least in part on previously captured and received real-time sensor data from any of the plurality of real-time sensors associated with the environment 300. Additionally, the current pathing data may have been transmitted to at least one computing device associated with the corresponding travelling object to cause and/or for use in traversing along the represented paths.

It will be appreciated that over time, circumstances of the operations within the environment 300 may change. For example, human actors, machinery, and/or the like within the environment may operate slowly, be delayed for any of a myriad of expected and/or unexpected reasons, and/or otherwise may have changes in the circumstances within the environment 300. In this regard, the determinations made for operating within the environment 300 may require updating as such changes in circumstances are determined, for example based on continuously monitored real-time sensor data captured and/or transmitted from each of the plurality of real-time sensors within the environment 300.

As illustrated for example, a real-time data aggregation and processing system may receive a continuous set of sensor data including the real-time sensor data captured by the various real-time in the environment 300 and transmitted over a high-throughput communications network. In some embodiments, the real-time data aggregation and processing system processes the continuous set of sensor data to perform one or more determination(s) and/or update one or more portion(s) of data. For example, in some embodiments, the real-time data aggregation and processing system processes the continuous set of sensor data to determine one or more event(s) occurring within the environment 300 and/or likely to occur within the environment 300 based on one or more algorithm(s) for detecting such events. As depicted, for example, image data from one or more real-time sensors, such as the fixed video sensors 302A, 302B, 203C, mobile video sensors 308C and/or 308D, and/or the client device 312B may be captured, transmitted to the real-time data aggregation and processing system, and subsequently processed. Based at least in part on such data, and/or other sensor data for example, the real-time data aggregation and processing system may determine that one or more event(s) (e.g., collision and/or congestion events) is/are likely to occur within the environment 300. Alternatively or additionally, in some embodiments, event(s) are detected entirely based on sensor data collected from real-time sensor(s) onboard, affixed to, and/or otherwise movable with an instruction-controlled travelling object, an independently travelling object, and/or the like.

For example, based at least in part on the continuous set of sensor data received from the real-time sensors 302A-302C, 308C, 308D, and 312B, the real-time data aggregation and processing system may detect travelling object(s) within the environment 300, determine current location data associated with each of the travelling object(s), determine current pathing data associated with each of the travelling object(s), and/or identify event(s) likely to occur within the environment 300 based at least in part on the sensor data and/or determinations derived therefrom. As illustrated, for example, the real-time data aggregation and processing system may determine from the current location data and current pathing data associated with travelling object 306D and/or 310B that a collision event will likely occur at the particular location 354. The real-time data aggregation and processing system may process any portion of the received continuous set of sensor data to determine such event(s), including sensor data from any number of real-time sensor(s), particular type(s) of sensor data, and/or the like. In some embodiments, the real-time data aggregation and processing system stores data flagging the particular location 354 as associated with a congestion event and/or potential congestion event, for example such that one or more travelling object(s) may be re-pathed to avoid this location and/or monitor a future status of the particular location 354 to determine whether the congestion event is remediated.

In some embodiments, a travelling object performs some or all of the operations for pathing data generation and/or determination. In some embodiments, for example, an instruction-controlled travelling object processes some or a portion of a continuous set of real-time sensor data (e.g., onboard sensor data) to perform one or more determinations for how to traverse to avoid one or more event(s) detected as likely. For example, in some embodiments, the instruction-controlled travelling object processes sensor data utilizing a decision tree to modify at least a portion of optimized pathing data and/or current pathing data. In some embodiments where the instruction-controlled travelling object does not perform any such operations (e.g., where a real-time data aggregation and processing system performs all such pathing data generation operations), the configuration of instruction-controlled travelling object(s) may be advantageously adapted. For example, in such embodiments, one or more instruction-controlled travelling object(s) may be designed, manufactured, and/or otherwise utilized that include reduced, simplified, and/or less costly components.

In some embodiments, the real-time data aggregation and processing system generates optimized pathing data associated with one or more travelling object(s) based at least in part on the continuous set of sensor data, determination(s) therefrom, and/or event(s) determined therefrom. For example, in some embodiments, the real-time data aggregation and processing system process(es) generates optimized pathing data associated with one or more travelling objects to alter the paths along which such travelling objects are to travel to avoid a particular determined event and/or reduce the likelihood of a particular event(s) (e.g., collision and/or congestion events) occurring within the environment 300. For example, as illustrated, the real-time data aggregation and processing system may process the continuous set of sensor data to determine location(s) to be avoided and/or preferred locations, and to generate optimized pathing data that avoids such location(s). As illustrated, for example, the real-time data aggregation and processing system may generate optimized pathing data representing the path 356 to avoid the location 354 and transmit such generated optimized pathing data to a computing device associated with the travelling object 310B, such as the client device 312B. In this regard, such optimized pathing data avoids the collision event at the location 354. Similarly, the real-time data aggregation and processing system may generate the optimized pathing data representing the path 356 to avoid creating new event(s), undesired circumstance(s), and/or the like based on the optimized pathing data, for example based at least in part on avoiding interference with the path 352C being traversed by the travelling object 306C.

In some embodiments, the real-time data aggregation and processing system generates optimized pathing data based at least in part on a task process associated with the travelling object. In some such embodiments, for example, the real-time data aggregation and processing system may generate the optimized pathing data based on a current task process associated with the travelling object, such that a new path is generated to a target location for the current target location based on a current task process. Alternatively or additionally, in some embodiments for example, the real-time data aggregation and processing system may generate the optimized pathing data based on updating a current task process to an updated task process. The updated task process may alter the current task operation to be performed by the travelling object such that the travelling object begins traversing to a new target location, for example a new target location that is along or otherwise proximate to the updated path 356 represented by the optimized pathing data generated for the travelling object 310B. It will be appreciated, as described herein, that the real-time data aggregation and processing system may generate optimized pathing data associated with any number of travelling objects in the environment 300.

### Example Data Flow of the Disclosure

Having described example systems and apparatuses in accordance with the present disclosure, example visualizations of the data flows between such systems, devices, and/or apparatuses of the present disclosure will now be discussed. The depicted data flow(s) represent specific example data flows for aggregating and processing real-time sensor data transmitted over a high-throughput communications network (e.g., a continuous set of sensor data) and associated with a particular environment. It will be appreciated that, in other embodiments, such data flows may differ without deviating from the scope and spirit of this disclosure. For example, in some embodiments, other types of sensor data may be received and/or processed. Additionally or alternatively, in some embodiments, the generated output data types may differ based on the same and/or different input data. In this regard, the specific data flow(s) depicted herein should not limit the scope or spirit of this disclosure.

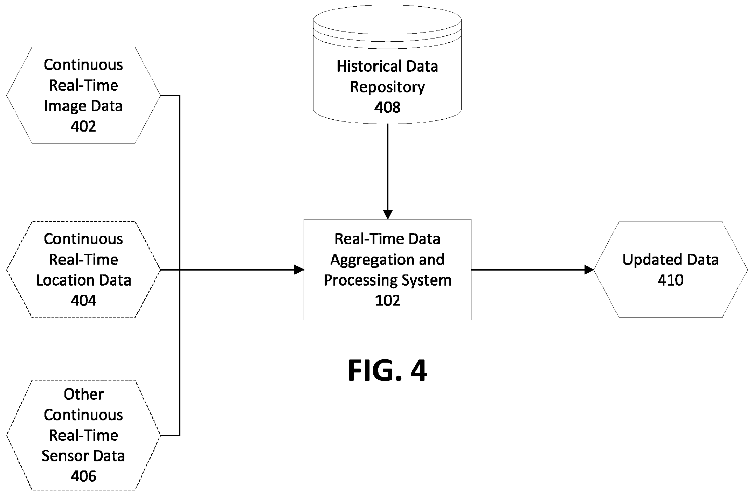

FIG. 4 illustrates a data flow for generating optimized pathing data based at least in part on captured continuous real-time sensor data set(s) in accordance with at least some example embodiments of the present disclosure. Specifically, FIG. 4 illustrates aggregating and processing of a continuous set of sensor data by a real-time data aggregation and processing system 102 for to generate and/or output updated data. In some such embodiments, the real-time data aggregation and processing system is embodied by one or more specially configured computing devices, such as the real-time pathing apparatus 200. The real-time data aggregation system and processing system 102 communicates with a historical data repository 408. In some embodiments, the historical data repository 408 is embodied by one or more computing devices embodied in hardware, software, firmware, and/or a combination thereof, separate from the real-time data aggregation and processing system 102. Alternatively or additionally, in some embodiments, the historical data repository 408 is embodied by hardware, software, firmware, and/or a combination thereof, within and/or otherwise controlled by the real-time data aggregation and processing system 102. In some embodiments, the historical data repository 408 is embodied virtually (e.g., as a virtual database controlled via one or more device(s) of the real-time data aggregation and processing system 102) and/or otherwise in the cloud, such that the real-time data aggregation and processing system 102 has access and control of the historical data repository 408 without having access to the hardware upon which the historical data repository 408 is managed.

As illustrated, the real-time data aggregation and processing system 102 receives a continuous set of data including any number of data portions. For example, in some embodiments, the continuous set of real-time sensor data includes a first continuous subset of data including continuous real-time image data 402. In some embodiments, the continuous real-time image data 402 includes images, video frames, and/or other image data captured by one or more real-time sensors (e.g., real-time image sensors and/or real-time video sensors). Such real-time sensors may communicate the continuous real-time image data 402 individually to the real-time data aggregation and processing system 102 via a high-throughput communications network as the data is captured, such that the real-time data aggregation and processing system 102 receives the data in real-time or near-real-time. In this regard, the high-throughput communications network may enable transmission of high fidelity image data (e.g., high resolution and/or high number of frames captured) while maintaining continuous, real-time communication of such data to the real-time data aggregation and processing system 102.

Optionally, as illustrated, the continuous set of sensor data may include any of a number of other data subsets. For example, in some embodiments, the continuous set of sensor data includes a data subset embodying continuous real-time location data 404. Additionally or alternatively, optionally in some embodiments, the continuous set of sensor data includes a data subset embodying other continuous real-time sensor data 406. Such other continuous real-time sensor data 406 may include a subset of movement sensor data, a subset of object detection data, and/or the like, captured and transmitted by one or more real-time sensors associated with the same particular environment. It should be appreciated that, in this regard, the particular data within a continuous set of sensor data may include any data type and/or combination of data types. For example, in some embodiments, a continuous set of sensor data does not include continuous real-time image data 402, and includes other types of sensor data.

In some embodiments, the real-time data aggregation and processing system 102 processes the continuous set of sensor data (e.g., including the continuous real-time image data 402, continuous real-time location data 404, and/or the other continuous real-time sensor data 406) to perform one or more determination(s), algorithm(s), and/or the like. It should be appreciated that the different portions of the continuous set of sensor data may be utilized for different process(es) performed by the real-time data aggregation and processing system 102, and/or may supplement one or more process(es) performed by the real-time data aggregation and processing system 102. In some embodiments, for example, the real-time data aggregation and processing system 102 processes the continuous real-time image data 402 to detect a set of travelling objects an environment and/or location data associated with each of such travelling objects in the set. The real-time data aggregation and processing system 102 may execute one or more image processing algorithm(s) that identify representation(s) corresponding to travelling object(s) from the image data represented in the continuous real-time image data 402 (e.g., image data objects, video frame data object(s), and/or then like).

Additionally or alternatively in some embodiments the real-time aggregation and processing system 102 determines location data corresponding to travelling object(s) represented within the continuous real-time image data 402. In some such embodiments, the real-time data aggregation and processing system 102 utilizes one or more image processing algorithm(s) to determine a distance between the real-time sensor that was utilized to capture the image data being processed and a travelling object represented in the captured image data of the continuous real-time image data 402. The real-time data aggregation and processing system 102 may determine the location data associated with the represented travelling object based on the distance and a determined position associated with the real-time sensor (e.g., from a database such as the historical data repository 408 and/or retrieved upon request to the real-time sensor). The real-time data aggregation and processing system 102 may process the continuous real-time location data 404 to verify the results of the location data determination. Alternatively or additionally in some embodiments, the real-time data aggregation and processing system 102 utilizes additional data from the other continuous real-time sensor data 406 to verify and/or determine such location data. For example, in some embodiments the other continuous real-time sensor data 406 includes motion sensor data and the real-time data aggregation and processing system 102 utilizes such data to identify a travelling object and/or determine or validate the location data associated with the travelling object.

The real-time data aggregation and processing system may identify current pathing data associated with each of one or more travelling object(s). In some embodiments, the current pathing data is identified based at least in part on the continuous set of sensor data. For example, in some embodiments, the current pathing data associated with a particular travelling object is identified based at least in part on the continuous real-time image data 402. For example, the pathing of a travelling object over time may be determined based on the changes associated with a position of a representation corresponding to a travelling object within such continuous real-time image data 402 and/or previously captured image data from the historical data repository 408. Alternatively or additionally, in some embodiments, the current pathing data associated with each of the one or more travelling object(s) may be retrieved from one or more data repositories, for example from the historical data repository 408.

In some embodiments, the real-time data aggregation and processing system generates updated data for one or more portions of data associated with one or more travelling objects from a set of travelling objects. The real-time data aggregation and processing system 102 may update the data based on one or more portions of the continuous set of sensor data. As illustrated for example, the real-time data aggregation and processing system 102 may generated the updated data 410. The updated data 410 may include, for example, optimized pathing data associated with each of one of more travelling object(s), updated task process(es) associated with each of one or more travelling object(s), and/or the like. In some embodiments, the real-time data aggregation and processing system 102 generates updated data including an updated task process for a particular travelling object. The updated task process may include one or more new task operations and/or a reordering of task operations within a current task process. The updated task process may update the order of target locations to which a travelling object is to traverse, such that optimized pathing data based at least in part on the updated task process so as to avoid one or more event(s) detected from the continuous set of sensor data, reduce the likelihood of event(s), and/or otherwise improve the paths along which travelling objects traverse to perform one or more task operations.

In some embodiments, the real-time data aggregation and processing system 102 generates updated data 410 including, for example, optimized pathing data associated with one or more travelling object(s). In some embodiments, the real-time data aggregation and processing system 102 generates updated data 410 including optimized pathing data for travelling object(s) determined involved with an event, such as a collision event and/or a congestion event, based on the continuous set of real-time data.

In some embodiments, the real-time data aggregation and processing system 102 transmits the updated data 410 and/or portions thereof to one or more computing devices. For example, in some embodiments, the real-time data aggregation and processing system 102 transmits at least a portion of the updated data 410 to a computing device corresponding to a travelling object with which the portion of updated data 410 is associated. For example, in some embodiments the real-time data aggregation and processing system 102 transmits a first portion of the updated data 410 embodying an updated task process associated with a particular travelling object and/or optimized task process associated with the particular travelling object to a computing device associated with the travelling object for processing. The computing device may be identified from the continuous set of sensor data, for example based at least in part on the other continuous real-time sensor data 406, continuous real-time location data 404, continuous real-time image data 402, data stored to the historical data repository 408, and/or the like, and/or associations between the continuous set of sensor data and data stored in the historical data repository 408. For example, the real-time data aggregation and processing system 102 may maintain prior locations associated with a particular travelling object, and determine the identity of a travelling object represented in the continuous set of sensor data based at least in part on a comparison between the historical location for each travelling object and current location data derived from the continuous set of sensor data.

It should be appreciated that, in some embodiments, the real-time data aggregation and processing system 102 performs such processing for data associated with a single environment. For example, various real-time sensors located within and/or otherwise associated with a particular environment may communicate with a real-time data aggregation and processing system 102 dedicated to that particular environment (e.g., an on-site central system, a remote dedicated system, and/or the like). Alternatively or additionally, in some embodiments, the real-time data aggregation and processing system 102 aggregates and processes multiple continuous sets of sensor data, each corresponding to a particular environment of a plurality of environments. For example, in some embodiments, the real-time data aggregation and processing system 102 receives a first continuous set of sensor data from a first set of real-time sensors monitoring a first environment, and similarly receives a second continuous set of sensor data from a second set of real-time sensors monitoring a second environment. In some such embodiments, the real-time data aggregation and processing system 102 stores the first continuous set of sensor data associated with one or more data identifier(s) identifying the first environment and stores the second continuous set of sensor data associated with one or more data identifier(s) identifying the second environment. In some such embodiments, the real-time data aggregation and processing system 102 processes such data sets independently, such that the first continuous set of sensor data is utilized to generate updated data associated with the first environment and second continuous set of sensor data is utilized to generate updated data associated with the second environment. It should be appreciated that different continuous sets of sensor data may be transmitted over different high-throughput communication networks, over the same high-throughput communications network, or may be communicated via a two high-throughput communications networks sharing one or more components.

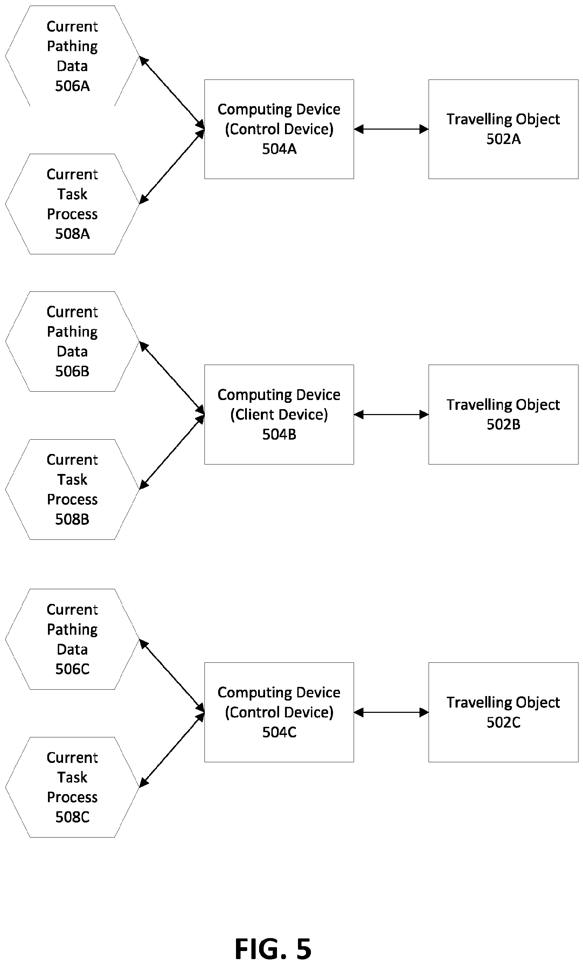

FIG. 5 illustrates an example computing environment including associated data and computing devices in accordance with at least some example embodiments of the present disclosure. described herein. Specifically, as illustrated, FIG. 5 depicts associations between various travelling objects 502A, 502B, and 502C and corresponding associated computing devices 504A, 504B, and 504C. Additionally, FIG. 5 depicts associations between each computing device associated with a travelling object and data utilized by, maintained by, and/or otherwise associated with such computing device(s).

It will be appreciated that the data associations may be maintained via data identifiers and/or data properties stored by one or more system(s). For example, in some embodiments, a real-time data aggregation and processing system maintains each current pathing data and/or current task process associated with a data identifier that uniquely identifies the travelling object with which such data is associated. In this regard, the real-time data aggregation and processing system may function as a centralized point for controlling and/or updating operation of each of the travelling objects. Alternatively or additionally, in some embodiments, a computing device associated with a particular travelling object maintains the current pathing data and/or current task process associated with the travelling object as one or more data properties, such that the travelling object may utilize such data for its own operation.

As illustrated, each travelling object is associated with at least one computing device. Specifically, the travelling object 502A is associated with a computing device 504A embodying a control device. In this regard, the computing device 504A may include hardware, software, firmware, and/or a combination thereof, that controls movement of the associated travelling object 502A. For example, the computing device 504A may embody a perception and movement system of an autonomous vehicle, that activates one or more components to move the travelling object 502A, such as along a particular path based at least in part on data stored to, maintained by, and/or otherwise accessible by the computing device 504A. It will be appreciated that, in some embodiments, the computing device 504A comprises a sub-device and/or sub-system of the travelling object 502A (e.g., a sub-system of an autonomous vehicle).

The computing device 504A maintains and/or otherwise accesses the current pathing data 506A and/or the current task process 508A associated with the travelling object 502A. The current pathing data 506A may represent a path along which the travelling object 502A is to travel. The path may represent a direction and/or velocity, embody a set of waypoints and/or target location(s), and/or the like. In this regard, the computing device 504A embodying a control device may utilize the current pathing data 506A to cause the travelling object 502A to automatically traverse along the path represented by the current pathing data 506A.

Additionally or alternatively, the computing device 504A maintains and/or otherwise accesses the current task process 508A associated with the travelling object 502A. The current task process 508A may include any number of task operations to be performed by the travelling object 502A. In some embodiments, the current pathing data 506A is generated based at least in part on the current task process 508A. For example, the path represented by the current pathing data 506A may include or otherwise represent traversal to particular target location(s) at which task operations may be performed in a particularly defined order. In this regard, the computing device 504A embodying the control device may utilize the current task process 508A to perform particular action(s) for completing the task operation. For example, the computing device 504A may utilize the current task process 508A to identify a next task operation to be performed, traverse to a particular target location associated with the next task operation, identify a particular item associated with a task operation, and/or to initiate performance of a particular action associated with a task operation at a particular target location.

Such data may be maintained and/or accessed independently for any of a number of travelling objects, such as instruction-controlled objects that are controlled by such data-driven determinations. As illustrated for example, travelling object 502C is similarly associated with a computing device 504C embodying a control device associated with the travelling object 502C. The computing device 504C may similarly embody a perception and movement system of another autonomous vehicle, and similarly may activate components of the other autonomous vehicle based on data associated with the travelling object 502C specifically.

The computing device 504C maintains and/or otherwise accesses the current pathing data 506C and/or the current pathing data 506A. The computing device 504C may utilize the current pathing data 506C and/or the current task process 508C in a manner similar to that described with respect to the similarly named current pathing data 506A and current task process 508A. In this regard, it should be appreciated that the travelling object 502C may be associated with other current pathing data 506C and/or other current task process 508C, such that the travelling object 502C traverses along a different path and/or performs action(s) associated with other task operations of its own current task process 508C.

As further illustrated, the travelling object 502B is associated with a computing device 504B embodying a client device. For example, the computing device 504B may embody a client device (e.g., a user device) in possession and/or control of the travelling object 502B (e.g., a user). In this regard, the computing device 504B may include hardware, software, firmware, and/or a combination thereof, that generates and/or renders interface(s) including information to be utilized by the travelling object 502B to a display. In some embodiments, the computing device 504B includes information that includes a path, instructions for traversing along a path, a representation of an item associated with a task operation, and/or instructions for performing action(s) associated with a task operation, and/or the like. The travelling object 502B may utilize such interface(s) to perform action(s), traverse along a particular path, and/or the like.

The computing device 504B maintains and/or otherwise accesses the current pathing data 506B representing a path along which the travelling object 502B is to travel. The path may represent a direction and/or waypoints along which the travelling object 502B is to travel. In this regard, the computing device 504B embodying a client device may utilize the current pathing data 506B to instruct the travelling object 502B to move along the particular path.

Additionally or alternatively, the computing device 504B maintains and/or otherwise accesses the current task process 508B associated with the travelling object 502B. The current task process 506B may include any number of task operations to be performed by the travelling object 502B. In some embodiments, the current pathing data 506B is generated based at least in part on the current task process 508B. For example, the path represented by the current pathing data 506B may include or otherwise represent target locations to which the travelling object 502B is to traverse to perform one or more task operations in a particularly defined order. In some such embodiments, the computing device 504B may render information associated with the next task operation in the current task process 508B, including a representation of an item to be interacted with, a location where the task operation is to be performed, and/or the like.

The current data associated with any particular travelling object may be updated to facilitate a change in pathing and/or action. For example, in some embodiments, the current pathing data 506A is updated to represent optimized pathing data generated associated with the travelling object 502A. Additionally or alternatively, the current task process 508A current task process 508A may be updated to represent an updated task process generated associated with the travelling object 502A. The updated task process and/or optimized pathing data may be generated by a real-time data aggregation and processing system to the computing device associated with a particular travelling object, for example to one or more of the computing device(s) 504A, 504B, and/or 504C, to facilitate updating of such data for use by the associated travelling object 502A, 502B, and/or 502C.

### Example Processes of the Disclosure

Having described example systems, apparatuses, environments, data flows in accordance with the present disclosure, example processes in accordance with the present disclosure will now be discussed. It will be appreciated that each of the flowcharts depicts an example computer-implemented process that may performed by one or more of the apparatuses, systems, devices, and/or computer program products described herein, for example using one or more of the specially configured components thereof. The blocks depicted indicate operations of each process. Such operations may be in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes may include some or all operational steps described and/or depicted, including one or more optional blocks in some embodiments. With regard to the flowcharts illustrated herein, one or more of the depicted blocks may be optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

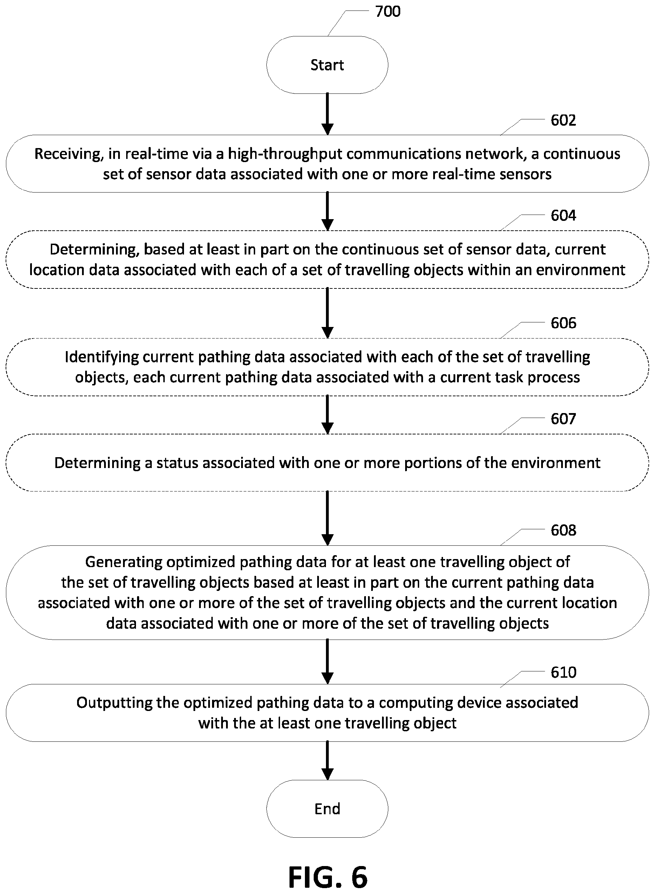

FIG. 6 illustrates a flowchart depicting example operations of an example process for generating optimized pathing data for at least one travelling object in accordance with at least some example embodiments of the present disclosure. Specifically, FIG. 6 illustrates operations of an example process 600. In some embodiments, the example process 600 is embodied by computer program code stored on a non-transitory computer-readable storage medium of a computer program product configured for execution to perform the process as depicted and described. Alternatively or additionally, in some embodiments, the process 600 is performed by one or more specially configured computing devices, such as the real-time pathing apparatus 200 alone or in communication with one or more other component(s), device(s), system(s), and/or the like. In this regard, in some such embodiments, the real-time pathing apparatus 200 is specially configured by computer-coded instructions (e.g., computer program instructions) stored thereon, for example in the memory 204 and/or another component depicted and/or described herein and/or otherwise accessible to the real-time pathing apparatus 200, for performing the operations as depicted and described. In some embodiments, the real-time pathing apparatus 200 is in communication with one or more external apparatus(es), system(s), device(s), and/or the like, to perform one or more of the operations as depicted and described. For example, the real-time pathing apparatus 200 may be in communication with any number of real-time sensor(s), client device(s), control device(s), and/or travelling object(s). For purposes of simplifying the description, the process 600 is described as performed by and from the perspective of the real-time pathing apparatus 200, for example embodying a particular real-time data aggregating and processing system.

The process 600 begins at operation 602. At operation 602, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to receive, in real-time via a high-throughput communications network, a continuous set of sensor data associated with one or more real-time sensors. The continuous set of sensor data may represent data associated with any number of aspects of a particular environment. In some embodiments, the one or more real-time sensors are positioned within the environment, component(s) of travelling objects within the environment, and/or otherwise associated with a particular environment such that each of the real-time sensors may monitor one or more aspect(s) of the environment.

In some embodiments, the high-throughput communications network is specially configured to facilitate continuous real-time and/or near-real-time, communication of each portion of the continuous set of sensor data from each of the one or more real-time sensors. For example, in some embodiments, the high-throughput communications network is embodied by one or more 5G networks, Wi-Fi 6 networks, or similar communications networks having sufficiently high throughput and low latency to facilitate continuous real-time transmission while further having sufficiently high capacity to enable transmission of robust, high-fidelity data (e.g., high resolution image data). In this regard, the real-time pathing apparatus 200 may continuously monitor one or more high-throughput communications networks for newly incoming data and, upon receipt of such newly incoming data, add the newly incoming data to the continuous set of sensor data. In some such embodiments, the continuous set of sensor data may embody a stored buffer or other short-term or long-term storage of sensor data received from the one or more real-time sensors. It will be appreciated that, in some embodiments, the high-throughput communications network includes a plurality of sub-networks.

In some embodiments, the continuous set of sensor data comprises a plurality of continuous data subsets. Each continuous data subset may be associated with a different type of sensor data, for example corresponding to a particular type or classification of real-time sensor from which such data was received. In some embodiments, for example, the continuous set of sensor data comprises a continuous data subset including image data (e.g., a first sensor data type) embodying image data objects captured by one or more image sensors and/or frames of video data captured by one or more video sensors, another continuous data subset including motion data (e.g., a second sensor data type) captured by one or more motion sensors, another continuous data subset including location data (e.g., a third sensor data type) captured by one or more location sensors, and/or the like. Alternatively or additionally, in some embodiments, individual continuous data subsets are received and maintained corresponding to each individual real-time sensor, and/or are maintained for particular groups of real-time sensors (e.g., real-time sensors located in or associated with a particular portion of the environment, a particular travelling object, and/or the like).

In some embodiments, the continuous set of sensor data includes data identifier(s) that uniquely identify one or more particular travelling object(s) at particular location(s), identifying one or more with which one or more portions of the continuous set of sensor data is/are associated with (e.g., collected by onboard and/or attached real-time sensors) such travelling object(s), and/or the like. For example, in some embodiments, the continuous set of sensor data includes a data identifier that uniquely identifies the travelling object having real-time sensor(s) onboard from which the continuous set of sensor data, and/or a portion thereof, was captured. In some embodiments, the data identifier is static with respect to a particular travelling object (e.g., an autonomous vehicle identifier). Alternatively, in some embodiments, the data identifier is set based on a user login (e.g., a user identifier resulting from successful authorization of a user account). Alternatively or additionally, in some embodiments, the data identifier is set based at least in part on a data profile for a travelling object and/or device that captured the sensor data. In one example context, the data identifier embodies a radio address associated with a particular travelling object and/or client device associated therewith. The data identifier may be utilized to associate sensor data with the travelling object from which it was captured, identify a task process assigned to a particular travelling object (e.g., for which optimized pathing data is being generated), and/or the like.

At operation 604, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to determine, based at least in part on the continuous set of sensor data, current location data associated with each of a set of travelling objects within an environment. In some embodiments, the real-time pathing apparatus 200 detects one or more travelling objects within the environment represented in image data within the high-throughput communications network. For example, the real-time pathing apparatus 200 may utilize one or more object detection algorithm(s), computer-vision model(s), and/or the like to detect travelling objects from within image data of the continuous set of sensor data. It will be appreciated that any of a myriad of custom algorithm(s), model(s), and/or other mechanism(s) may be utilized to detect one or more travelling object(s) within the continuous set of sensor data, and/or one or more known algorithm(s), model(s), and/or other mechanism(s) may be utilized to detect one or more travelling object(s) from within such captured image data. In some embodiments, the travelling objects within an environment are detected in whole or in part based on non-image sensor data. For example, in some embodiments, the presence of a travelling object is detected from motion data, range data, and/or other data types in the continuous set of sensor data, and image data of the continuous set of sensor data may be used to determine the identity of the travelling object, a size or boundary of the travelling object, and/or the like. Alternatively or additionally, in some embodiments, the real-time pathing apparatus 200 determines the existence of one or more travelling object(s) based on data previously stored to, maintained by, and/or otherwise accessible to the real-time pathing apparatus 200 that identifies one or more travelling object(s) and/or location data associated therewith.

In some embodiments, the real-time pathing apparatus 200 determines the current location associated with one or more travelling object(s) of the set of travelling object(s) within the environment from data of the continuous set of sensor data. In some embodiments, the real-time pathing apparatus 200 determines the location data object associated with one or more travelling object(s) detected in image data of the continuous set of sensor data. For example, in some embodiments the real-time pathing apparatus 200 triangulates the location data object corresponding to a particular travelling object represented in image data of the continuous set of sensor data, such as based on at least in part on known location data corresponding to the real-time sensor that captured the image data and/or known location data corresponding to other object(s) represented in such image data. In some embodiments, location data object(s) determined from image data of the continuous set of sensor data is/are supplemented based at least in part on other sensor data within the continuous set of sensor data. For example, in some embodiments, the real-time pathing apparatus validates, alters, and/or otherwise determines the location data object associated with one or more travelling object(s) of the set of travelling objects within the environment based at least in part on location data, motion data, and/or the like. Such additional data portions may supplement determination of the location data object for a particular travelling object based on image data, such as via triangulation for example.

At operation 606, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to identify current pathing data associated with each of the set of travelling objects. The current pathing data indicates a current path of travel corresponding to the travelling object. In some embodiments, the current pathing data corresponds to a particular vector, speed and direction, or other determination of a travelling object's movement between two timestamps corresponding to data within the continuous set of sensor data. For example, in some embodiments, the real-time pathing apparatus 200 determines the current pathing data for a particular travelling object by processing image data represented in the continuous set of sensor data that corresponds to two or more timestamps. In this regard, the real-time pathing apparatus 200 may determine the velocity, speed, direction, orientation and/or other components of a travelling object's movement based on the image data at each timestamp and/or changes between such image data. Alternatively or additionally, in some embodiments, the current pathing data may be identified from non-image data, for example based at least in part on one or more timestamps of motion data, range data, and/or the like, and/or changes between such data between two or more timestamps. Alternatively or additionally, in some embodiments, the current pathing data embodies a waypoint, set of waypoints, or other defined set of locations for traversal by the travelling object to reach a particular target location or set of target locations.

In some embodiments, the current pathing data is associated with a current task process. The current task process may indicate one or more action(s) to be performed by the travelling object at a current timestamp or a future timestamp. For example, in some embodiments, the current task process indicates one or more item(s) for selection and/or picking by the travelling object at one or more target location(s). In this regard, the current pathing data may indicate a current and/or future movement of a travelling object towards such one or more target location(s) at which operation(s) associated with the current task process are to be performed. It will be appreciated that each travelling object may be associated with different current pathing data and/or a different current task process. In this regard, each travelling object may be operating independently (e.g., to perform individual tasks defined in the current task process) and/or a plurality of travelling objects may operate in conjunction with one another to perform a task involving the plurality of travelling objects (e.g., selecting, moving, and/or otherwise interacting with a large item, a heavy item, and/or the like).

At operation 607, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to determine a status associated with one or more portions of the environment. The status associated with one or more portions of the environment are determined at least based in part on the continuous set of sensor data. For example, in some embodiments, real-time video data, image data, and/or the like is/are processed to determine whether one or more event(s), scenario(s), and/or the like are detected at particular location(s) throughout the environment. Such event(s), scenario(s), and/or the like are determinable from the sensor data utilizing object detection algorithm(s) (e.g., via image processing), range data processing, motion data processing, and/or the like. Alternatively or additionally, in some embodiments, the event(s), scenario(s), and/or the like are determined based at least in part on historical data maintained by and/or otherwise accessible to the real-time pathing apparatus 200. For example, a previously detected event, scenario, and/or the like may be flagged and an indication stored until data the real-time pathing apparatus subsequently determines the event and/or scenario has been remediated and/or resolved. In some embodiments, operation 607 is subsumed by the operations 604 and/or 606 as described herein.

At operation 608, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to generate optimized pathing data for at least one travelling object of the set of travelling objects. The optimized pathing data may represent a new path, changes to a current path, and/or otherwise updated instructions for how a travelling object should move throughout the environment. The real-time pathing apparatus 200 generates the optimized pathing data based at least in part on any of a myriad of data. For example, in some embodiments the real-time pathing apparatus 200 generates the optimized pathing data based at least in part on the current pathing data associated with one or more travelling object(s) of the set of travelling objects, the current location data associated with one or more travelling object(s) of the set of travelling objects, determination(s) made based at least in part on the continuous set of sensor data, current pathing data, current location data for one or more of the set of travelling object(s), and/or the like. In one example context, for example, the real-time pathing apparatus 200 generates optimized pathing data for at least one travelling object to avoid and/or remediate a current scenario, event, and/or the like (e.g., a congestion event, a collision event, and/or the like), detected as occurring within the environment based at least in part on the continuous set of sensor data, the location data associated with travelling object(s) of the set of travelling objects within the environment, current pathing data associated with such travelling object(s), and/or the like. Alternatively or additionally, in some embodiments, the real-time pathing apparatus 200 generates optimized pathing data for at least one travelling object to prevent and/or otherwise remediate a predicted scenario, event, and/or the like (e.g., a future congestion event, a future collision event, and/or the like) determined as likely to occur within the environment at a future timestamp based at least in part on the continuous set of sensor data, the location data associated with travelling object(s) of the set of travelling object(s) within the environment, current pathing data associated with such travelling object(s), and/or the like.

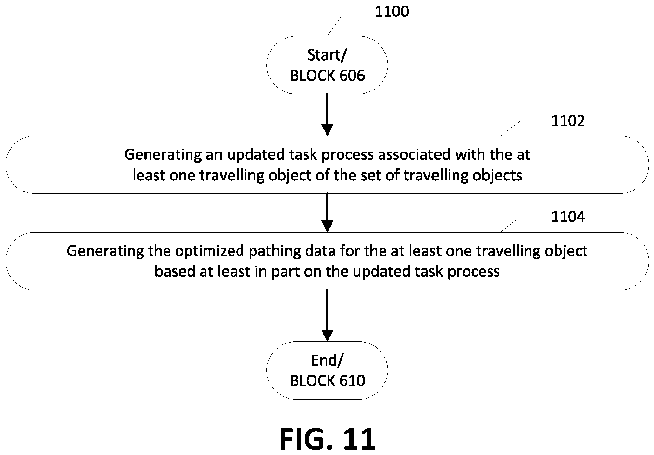

In some embodiments, the optimized pathing data includes one or more changes from the current pathing data, indicating at least a new portion of a path along which a travelling object should traverse. The optimized pathing data may correspond to updates to one or more other portion(s) of data, for example updates to the task process currently associated with a particular travelling object. In some embodiments, for example, the current task process associated with a travelling object remains unchanged, such that the optimized pathing data includes one or more new paths to the same set of target location(s) defined by and/or otherwise corresponding to one or more task operations represented in the current task process. Alternatively or additionally, in some embodiments, the current task process is updated to reflect an updated task process, and similarly the optimized pathing data is updated to include a new path to one or more target location(s) defined by and/or otherwise corresponding to the task operation(s) represented in the updated task process. In some such embodiments, the real-time pathing apparatus 200 generates the optimized pathing data utilizing one or more pathing algorithm(s), for example based at least in part on a current task process and/or updated task process associated with each travelling object of the at least one travelling object. Non-limiting example process(es) for generating optimized pathing data based on an updated task process are described herein with respect to the process 1100 depicted and described in FIG. 11, and the process 1200 depicted and described in FIG. 12.

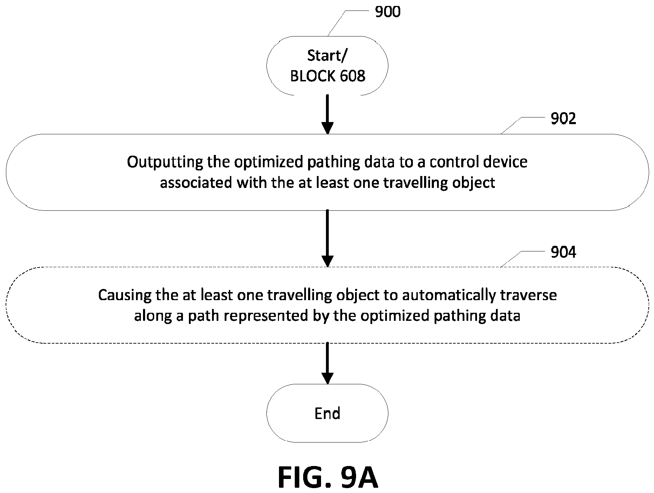

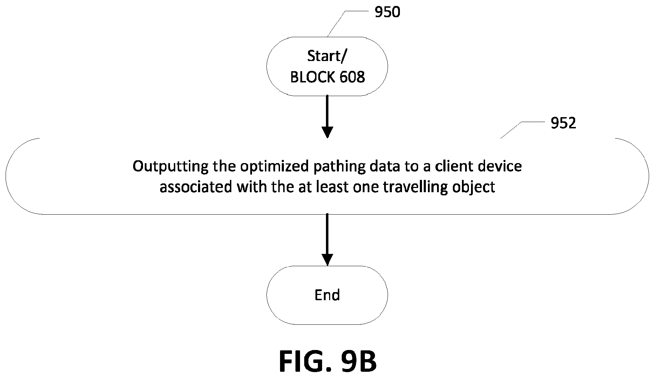

At operation 610, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to output the optimized pathing data to a computing device associated with the at least one travelling object. In some embodiments, the optimized pathing data is output to a determinable computing device associated with instructing and/or controlling movement by the travelling object along a particular path, for example defined by the optimized pathing data. In some embodiments, the real-time pathing apparatus 200 outputs the optimized pathing data for display, further processing, and/or execution via the computing device associated with the at least one travelling object. The real-time pathing apparatus 200 may store predefined associations between a travelling object and a computing device intended to receive the optimized pathing data, for example such that the computing device to which the optimized pathing data is to be output is determinable from an identity for a travelling object determined by the real-time pathing apparatus 200 (e.g., based on processing the continuous set of sensor data, historical data stored by the real-time pathing apparatus 200, predefined identifiers known to the real-time pathing apparatus 200, and/or the like). Non-limiting examples of outputting the optimized pathing data are described herein with respect to the process 900 depicted and described in FIG. 9A, and the process 950 depicted and described in FIG. 9B. In some embodiments, the real-time pathing apparatus 200 additionally and/or alternatively outputs real-time notification data, alert(s), and/or the like that indicate flagged event(s), scenario(s), and/or the like affecting particular portion(s) within the environment, and/or that indicate resolved and/or otherwise remediated previously detected event(s), scenario(s), and/or the like.

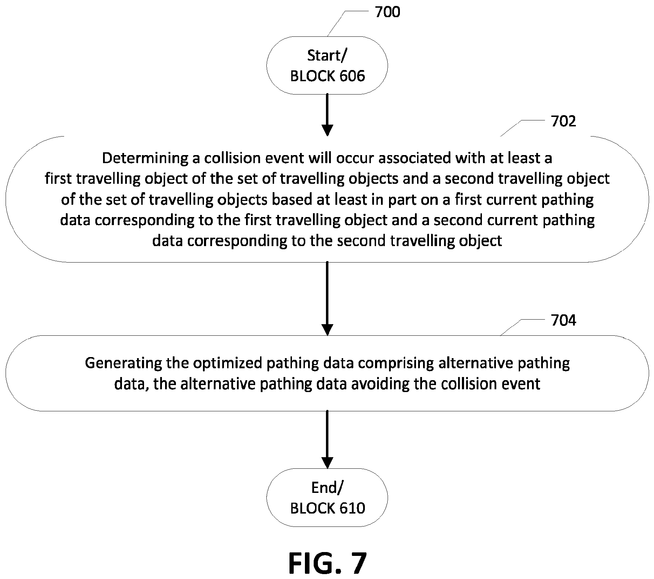

FIG. 7 illustrates a flowchart depicting example operations of an example process for generating optimized pathing data based on a collision event in accordance with at least some example embodiments of the present disclosure. Specifically, FIG. 7 depicts operations of an example process 700. In some embodiments, the process 700 is embodied by computer program code stored on a non-transitory computer-readable storage medium of a computer program product configured for execution to perform the process as depicted and described. Alternatively or additionally, in some embodiments, the process 700 is performed by one or more specially configured computing devices, such as the real-time pathing apparatus 200 alone or in communication with one or more other component(s), device(s), system(s), and/or the like. In this regard, in some such embodiments, the real-time pathing apparatus 200 is specially configured by computer-coded instructions (e.g., computer program instructions) stored thereon, for example in the memory 204 and/or another component depicted and/or described herein and/or otherwise accessible to the real-time pathing apparatus 200, for performing the operations as depicted and described. In some embodiments, the real-time pathing apparatus 200 is in communication with one or more external apparatus(es), system(s), device(s), and/or the like, to perform one or more of the operations as depicted and described. For example, the real-time pathing apparatus 200 may be in communication with any number of real-time sensor(s), client device(s), control device(s), and/or travelling object(s). For purposes of simplifying the description, the process 700 is described as performed by and from the perspective of the real-time pathing apparatus 200, for example embodying a particular real-time data aggregating and processing system.

The process 700 begins at operation 702. In some embodiments, the process 700 begins after one or more operations depicted and/or described with respect to any of the other processes described herein. For example, in some embodiments as depicted, the process 700 begins after execution of operation 606 as depicted and described with respect to the process 600. In this regard, some or all of the process 700 may replace or supplement one or more blocks depicted and/or described with respect to any of the other processes described herein. Upon completion of the process 700, the flow of operations may terminate. Additionally or alternatively, as depicted, upon completion of the process 700, flow may return to one or more operations of another process, for example to the operation 610 as depicted and described with respect to the process 600. It should be appreciated that, in some embodiments, the process 700 embodies a subprocess of one or more other process(es), such as the process 700.

At operation 702, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to determine a collision event will occur within a particular environment. The real-time pathing apparatus 200 may determine the collision event will occur, and/or a probability indicating the likelihood of the collision event occurring at a future timestamp, based at least in part on the continuous set of sensor data, determinations derived therefrom, and/or other data associated with the environment. For example, the real-time pathing apparatus 200 may determine the collision event will occur based at least in part on current pathing data for one or more travelling object(s), current task process(es) for one or more travelling object(s), and/or the like. In some embodiments, the real-time pathing apparatus 200 determines the collision event will occur associated with two or more travelling objects, for example at least a first travelling object and a second travelling object of the set of travelling objects. In some such embodiments, the real-time pathing apparatus 200 determines first current pathing data corresponding to the first travelling object, for example, and second current pathing data corresponding to the second travelling object. The real-time pathing apparatus subsequently may determine that the first current pathing data and the second current pathing data will intersect at a particular location, and/or are likely to intersect at a particular location, at a future timestamp sufficient such that the associated first and second travelling objects will collide at the particular location. It will be appreciated that such a determination may be based on one or more known and/or determined (e.g., from the continuous set of real-time sensor data) characteristics associated with such travelling object(s), such as s size, height, or other boundary of the travelling object, speed, of the travelling objects, and/or the like. It will be appreciated that the real-time pathing apparatus 200 may determine any number of collision events that will occur, each involving any number of travelling object(s) within the environment.

At operation 704, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to generate the optimized pathing data comprising alternative pathing data for one or more travelling object(s). The alternative pathing data may avoid the collision event, such as by redirecting one or more of the travelling objects along an updated path not determined to be intersecting or likely to intersect with any other path being traversed by another travelling object. To avoid a collision event involving a plurality of travelling objects, the real-time pathing apparatus 200 may generate optimized pathing data for all travelling objects involved in the collision event or a subset of the travelling objects involved in the collision event. For example, in some embodiments, in the context where a collision event is determined will occur involving a first travelling object and a second travelling object, the real-time pathing apparatus 200 may generate optimized pathing data for both the first travelling object and the second travelling object to avoid the collision event. In other embodiments, in the context where a collision event is determined will occur involving the first and second travelling objects, the real-time pathing apparatus 200 may generate optimized pathing data for only the first travelling object or the second travelling object, and the other travelling object may continue based on its current pathing data. Embodiments may similarly generate alternative pathing data for some or all of the travelling objects to avoid collision events involving more travelling objects. In some embodiments, the real-time pathing apparatus 200 generates optimized pathing data for one or more travelling object(s) that represents a path sufficiently close to a collision event to enable real-time sensors onboard a travelling object and/or that move together with a travelling object to capture new sensor data associated with the location at which the collision event occurred. For example, one or more travelling object(s) may be periodically pathed near to the location of the collision event to enable real-time capturing of sensor data to determine in real-time whether the collision event persists. In other embodiments, the real-time pathing apparatus 200 generates optimized pathing data that represents a path for traversing to the location associated with a collision event, for example for one or more travelling object(s) assigned a task operation to remediate and/or otherwise resolve the collision event (e.g., by relocating items, other travelling object(s), and/or the like).

In some embodiments, the alternative pathing data is generated based at least in part on current location data corresponding to one or more travelling object(s). For example, the real-time pathing apparatus 200 may generate alternative pathing data for a particular travelling object based at least in part on the current location data corresponding to that particular travelling object. In some embodiments, the real-time pathing apparatus 200 generates alternative pathing data starting from the location represented by the current location data associated with the travelling object. In this regard, alternative pathing data may represent a path along which the particular travelling object is to traverse to avoid the collision event. Additionally or alternatively, the alternative pathing data may represent a target path along which the travelling object is to traverse to perform one or more task operations associated with a current and/or updated task process. For example, the alternative pathing data may correspond to an updated task process that includes a first task operation to be performed at a first target location determined closest to the location represented by the current location data corresponding to the travelling object and/or otherwise determined in close proximity (e.g., within a threshold distance) to the location represented by the current location corresponding to the travelling object. Non-limiting example process(es) for generating the alternative pathing data include the processes for generating optimized pathing data based on an updated task process as described herein with respect to the process 1100 depicted and described in FIG. 11 and the process 1200 depicted and described in FIG. 12.

It will be appreciated that avoiding congestion events provides a myriad of advantages. For example, by avoiding a congestion event, embodiments of the present disclosure improve the efficiency at which travelling objects operate. Such efficiency improvements in some contexts produce reduced fuel expenditure, reduced wasted computing resources (e.g., resources expended during capturing and/or storing of sensor data from the same area of an environment that is not actively changing), and the like. Additionally, by avoiding a congestion event, embodiments of the present disclosure advantageously reduce the likelihood of and/or completely avoid collision(s) of travelling object(s) that could potentially damage, destroy, or otherwise diminish the operability of the travelling object and/or portion(s) thereof. It will be appreciated that such technical advantages are provided in addition to operational efficiency within the environment, reduction of time to complete a task operation and/or multiple task operations, and/or any additional advantages derived therefrom.

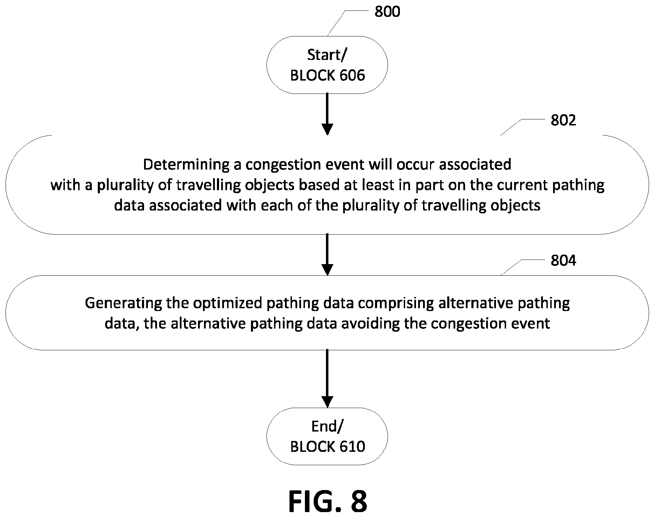

FIG. 8 illustrates a flowchart depicting example operations of an example process for generating optimized pathing data based on a congestion event in accordance with at least some example embodiments of the present disclosure. Specifically, FIG. 8 depicts operations of an example process 800. In some embodiments, the process 800 is embodied by computer program code stored on a non-transitory computer-readable storage medium of a computer program product configured for execution to perform the process as depicted and described. Alternatively or additionally, in some embodiments, the process 800 is performed by one or more specially configured computing devices, such as the real-time pathing apparatus 200 alone or in communication with one or more other component(s), device(s), system(s), and/or the like. In this regard, in some such embodiments, the real-time pathing apparatus 200 is specially configured by computer-coded instructions (e.g., computer program instructions) stored thereon, for example in the memory 204 and/or another component depicted and/or described herein and/or otherwise accessible to the real-time pathing apparatus 200, for performing the operations as depicted and described. In some embodiments, the real-time pathing apparatus 200 is in communication with one or more external apparatus(es), system(s), device(s), and/or the like, to perform one or more of the operations as depicted and described. For example, the real-time pathing apparatus 200 may be in communication with any number of real-time sensor(s), client device(s), control device(s), and/or travelling object(s). For purposes of simplifying the description, the process 800 is described as performed by and from the perspective of the real-time pathing apparatus 200, for example embodying a particular real-time data aggregating and processing system.

The process 800 begins at operation 802. In some embodiments, the process 800 begins after one or more operations depicted and/or described with respect to any of the other processes described herein. For example, in some embodiments as depicted, the process 800 begins after execution of operation 606 as depicted and described with respect to the process 600. In this regard, some or all of the process 800 may replace or supplement one or more blocks depicted and/or described with respect to any of the other processes described herein. Upon completion of the process 800, the flow of operations may terminate. Additionally or alternatively, as depicted, upon completion of the process 800, flow may return to one or more operations of another process, for example to the operation 610 as depicted and described with respect to the process 600. It should be appreciated that, in some embodiments, the process 800 embodies a subprocess of one or more other process(es), such as the process 600.

At operation 802, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to determine a congestion event will occur associated with a plurality of travelling objects. The real-time pathing apparatus 200 may determine the congestion event will occur and/or a probability indicating the likelihood of the congestion event occurring at a future timestamp based at least in part on the continuous set of sensor data, determination(s) derived therefrom, and/or other data associated with the environment. For example, the real-time pathing apparatus 200 may determine the congestion event will occur based at least in part on current pathing data for a plurality of travelling objects. In some such embodiments, the real-time pathing apparatus 200 may determine the current pathing data corresponding to each travelling object of a plurality of travelling objects. In some such embodiments, the real-time pathing apparatus subsequently may determine the current pathing data for all or a subset of the plurality of travelling objects each converge, meet, and/or otherwise will result in the travelling object(s) being located at or approaching a particular location at approximately the same timestamp.

The real-time pathing apparatus 200 may include one or more threshold value(s) and/or utilize one or more algorithm(s) to determine a likely congestion event. For example, in some embodiments, the real-time pathing apparatus 200 maintains a threshold number of travelling objects that may be within a predefined area within the environment within a particular time interval or at a particular timestamp, such that exceeding the threshold number of travelling objects within a predefined area indicates a congestion event. Alternatively or additionally, in some embodiments, the real-time pathing apparatus 200 determines a congestion event will occur in a circumstance where a travelling object is associated with current pathing data that, if traversed, will require the travelling object to slow down to avoid collision with a second travelling object (e.g., which may be moving at a slower speed). Alternatively or additionally, in some embodiments, the real-time pathing apparatus 200 determines a congestion event will occur in circumstances where the current pathing data indicates that, within a particular area, one or more travelling object(s) will take up a threshold percentage and/or amount of available space for traversal (e.g., 90% of the available space along a particular path, or more space than permissible to maintain a defined minimum margin of safety between travelling object(s) and other travelling object(s) and/or between travelling object(s) and the environment). In this regard, it will be appreciated that the real-time pathing apparatus 200 in some embodiments is specially configured with any of a myriad of customized algorithm(s) that define when a congestion event is determined will occur based on any desired requirements, thresholds, and/or determinable circumstances.

At operation 804, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to generate the optimized pathing data comprising alternative pathing for one or more travelling object(s). The alternative pathing data may avoid the congestion event, such as by redirecting one or more of the travelling object(s) along an updated path to alleviate the congestion at a particular location associated with the determined congestion event. To avoid a congestion event involving the plurality of travelling objects, the real-time pathing apparatus 200 may generate optimized pathing data for all travelling objects involved in the congestion event or a subset of the travelling objects involved in the congestion event. For example, in some embodiments, in the context where a congestion event determined will occur involving at least a first travelling object and a second travelling object, the real-time pathing apparatus 200 may generate optimized pathing data for both the first travelling object and the second travelling object to avoid the congestion event (e.g., redirecting both travelling objects along updated paths). In other embodiments, in the context where a congestion event determined will occur involving at least the first and second travelling objects, the real-time pathing apparatus 200 may generate optimized pathing data for only the first travelling object or the second travelling object, and the other travelling object may continue along its current pathing data (e.g., where redirection of one travelling object satisfies one or more condition(s) for avoiding the congestion event). Embodiments may similarly generate alternative pathing data for some or all of the travelling objects to avoid congestion events involving more travelling objects (e.g., three or more travelling objects).

In some embodiments, the alternative pathing data is generated based at least in part on current location data corresponding to one or more travelling object(s) associated with the congestion event. For example, the real-time pathing apparatus 200 may generate alternative pathing data for a particular travelling object based at least in part on the current location data corresponding to that particular travelling object. In some embodiments, the real-time pathing apparatus 200 generates alternative pathing data starting from the location represented by the current location data associated with the travelling object. In this regard, alternative pathing data may represent a path along which the particular travelling object is to traverse to avoid the congestion event. Additionally or alternatively, the alternative pathing data may represent a target path along which the travelling object is to traverse to perform one or more task operations associated with a current and/or updated task process. For example, the alternative pathing data may correspond to an updated task process that includes a first task operation to be performed at a first target location determined closest to the location represented by the current location data corresponding to the travelling object and/or otherwise determined in close proximity (e.g., within a threshold distance) to the location represented by the current location corresponding to the travelling object. Non-limiting example process(es) for generating the alternative pathing data include the processes for generating optimized pathing data based on an updated task process as described herein with respect to the process 1100 depicted and described in FIG. 11 and the process 1200 depicted and described in FIG. 12. In some embodiments, the real-time pathing apparatus 200 generates optimized pathing data for one or more travelling object(s) that represents a path sufficiently close to a congestion event to enable real-time sensors onboard a travelling object and/or that move together with a travelling object to capture new sensor data associated with the location at which the congestion event was detected. For example, one or more travelling object(s) may be periodically pathed near to the location of the congestion event to enable real-time capturing of sensor data to determine in real-time whether the congestion event persists. In other embodiments, the real-time pathing apparatus 200 generates optimized pathing data that represents a path for traversing to the location associated with a congestion event, for example for one or more travelling object(s) assigned a task operation to remediate and/or otherwise resolve the congestion event (e.g., by relocating item(s), other travelling object(s), and/or the like).

FIG. 9A illustrates a flowchart depicting example operations of an example process for causing automatic traversal along a path in accordance with at least some example embodiments of the present disclosure. Specifically, FIG. 9A depicts operations of an example process 900. In some embodiments, the process 900 is embodied by computer program code stored on a non-transitory computer-readable storage medium of a computer program product configured for execution to perform the process as depicted and described. Alternatively or additionally, in some embodiments, the process 900 is performed by one or more specially configured computing devices, such as the real-time pathing apparatus 200 alone or in communication with one or more other component(s), device(s), system(s), and/or the like. In this regard, in some such embodiments, the real-time pathing apparatus 200 is specially configured by computer-coded instructions (e.g., computer program instructions) stored thereon, for example in the memory 204 and/or another component depicted and/or described herein and/or otherwise accessible to the real-time pathing apparatus 200, for performing the operations as depicted and described. In some embodiments, the real-time pathing apparatus 200 is in communication with one or more external apparatus(es), system(s), device(s), and/or the like, to perform one or more of the operations as depicted and described. For example, the real-time pathing apparatus 200 may be in communication with any number of real-time sensor(s), client device(s), control device(s), and/or travelling object(s). For purposes of simplifying the description, the process 00 is described as performed by and from the perspective of the real-time pathing apparatus 200, for example embodying a particular real-time data aggregating and processing system.

The process 900 begins at operation 902. In some embodiments, the process 900 begins after one or more operations depicted and/or described with respect to any of the other processes described herein. For example, in some embodiments as depicted, the process 900 begins after execution of operation 608 as depicted and described with respect to the process 600. In this regard, some or all of the process 900 may replace or supplement one or more blocks depicted and/or described with respect to any of the other processes described herein. For example, the process 900 in some embodiments replaces the operation 610 as depicted and described with respect to the process 600. Upon completion of the process 900, the flow of operations may terminate. Additionally or alternatively, as depicted, upon completion of the process 900, flow may return to one or more operations of another process. It should be appreciated that, in some embodiments, the process 900 embodies a subprocess of one or more other process(es), such as the process 600.

At operation 902, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to output the optimized pathing data to a control device associated with the at least one travelling object. In some embodiments, the control device includes one or more computing device(s) embodied in hardware, software, firmware, and/or a combination thereof, that generates and/or processes instructions to control movement of at least one associated travelling object. For example, in some embodiments, the control device receives data (e.g., optimized pathing data) and processes such data to cause activation of one or more actuator(s), subsystem(s), and/or other component(s) to facilitate movement of the travelling object. The control device may embody or include an autonomous control system that utilizes motor(s), a perception system, and/or other associated components to facilitate driving, flying, and/or otherwise causes automatic traversal of the travelling object throughout the environment based on the optimized pathing data. In this regard, the real-time pathing apparatus 200 may transmit the optimized pathing data over one or more high-throughput communications networks, or in other embodiments transmits the optimized pathing data to the control device over a standard communications network upon generation of the optimized pathing data.

In some embodiments, the real-time pathing apparatus 200 determines the control device associated with a particular travelling object that is to receive the optimized pathing data based at least in part on the continuous set of sensor data. For example, in some embodiments, the real-time pathing apparatus 200 determines data identifying the travelling object from processing image data within the continuous set of sensor data, and identifies the control device associated with the travelling object (and/or particular data utilized for communicating with the control device) from the data identifying the travelling object (e.g., based on determinable correlations between such identifying data and control devices). Alternatively or additionally, in some embodiments for example, the real-time pathing apparatus 200 retrieves data identifying the travelling object and/or the control device associated therewith from the continuous set of sensor data (e.g., from RFID identity data received from RFID sensor(s) in the environment). It will be appreciated that the control device, and/or corresponding data for communicating with the appropriate control device associated with the at least one travelling object, may be identified utilizing any of the data available to the real-time pathing apparatus 200.

At optional operation 904, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to causing the at least one travelling object to automatically traverse along a path represented by the optimized pathing data. For example, the transmission of the optimized pathing data to the control device may automatically trigger one or more process(es) to be executed by the control device. Such process(es) may activate components of the control device and/or travelling object generally that result in particularly movements. In this regard, the real-time pathing apparatus 200 may transmit the optimized pathing data to the control device to cause the control device to process the optimized pathing data and initiate movements corresponding that automatically and/or autonomously traverse the travelling object along the path represented by optimized pathing data.

FIG. 9B illustrates a flowchart depicting example operations of an example process for outputting optimized pathing data to a client device in accordance with at least some example embodiments of the present disclosure. Specifically, FIG. 9B depicts operations of an example process 900. In some embodiments, the process 950 is embodied by computer program code stored on a non-transitory computer-readable storage medium of a computer program product configured for execution to perform the process as depicted and described. Alternatively or additionally, in some embodiments, the process 950 is performed by one or more specially configured computing devices, such as the real-time pathing apparatus 200 alone or in communication with one or more other component(s), device(s), system(s), and/or the like. In this regard, in some such embodiments, the real-time pathing apparatus 200 is specially configured by computer-coded instructions (e.g., computer program instructions) stored thereon, for example in the memory 204 and/or another component depicted and/or described herein and/or otherwise accessible to the real-time pathing apparatus 200, for performing the operations as depicted and described. In some embodiments, the real-time pathing apparatus 200 is in communication with one or more external apparatus(es), system(s), device(s), and/or the like, to perform one or more of the operations as depicted and described. For example, the real-time pathing apparatus 200 may be in communication with any number of real-time sensor(s), client device(s), control device(s), and/or travelling object(s). For purposes of simplifying the description, the process 950 is described as performed by and from the perspective of the real-time pathing apparatus 200, for example embodying a particular real-time data aggregating and processing system.

The process 950 begins at operation 952. In some embodiments, the process 950 begins after one or more operations depicted and/or described with respect to any of the other processes described herein. For example, in some embodiments as depicted, the process 950 begins after execution of operation 608 as depicted and described with respect to the process 600. In this regard, some or all of the process 900 may replace or supplement one or more blocks depicted and/or described with respect to any of the other processes described herein. For example, the process 950 in some embodiments replaces the operation 610 as depicted and described with respect to the process 600. Upon completion of the process 950, the flow of operations may terminate. Additionally or alternatively, as depicted, upon completion of the process 950, flow may return to one or more operations of another process. It should be appreciated that, in some embodiments, the process 950 embodies a subprocess of one or more other process(es), such as the process 600.

At operation 952, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to output the optimized pathing data to a client device associated with the at least one travelling object. In some embodiments, the client device includes one or more computing device(s) embodied in hardware, software, firmware, and/or a combination thereof, that renders display(s) and/or information associated with or represented by the optimized pathing data associated with at least one travelling object. For example, in some embodiments, the client device receives data (e.g., optimized pathing data) and processes such data to cause rendering of a user interface including the path represented by such data to a display of the client device. Such a display may be viewable by an independently travelling object associated therewith (e.g., a human operator of the client device) for use in traversing along the path represented by the optimized pathing data. In some embodiments, the real-time pathing apparatus transmits the optimized pathing data over one or more high-throughput communications networks, or in other embodiments the real-time pathing apparatus 200 transmits the optimized pathing data to the control device over a standard communications network upon generation of the optimized pathing data.

In some embodiments, the real-time pathing apparatus 200 determines the client device associated with a particular travelling object that is to receive the optimized pathing data based at least in part on the continuous set of sensor data. Additionally or alternatively, the real-time pathing apparatus 200 may identify the client device associated with the travelling object (and/or particular data utilized for communicating with the client device) from the data identifying the travelling object. Alternatively or additionally, in some embodiments for example, the real-time pathing apparatus 200 retrieves data identifying the travelling object and/or the control device associated therewith from the continuous set of sensor data (e.g., from RFID identity data from the client device received from RFID sensor(s) in the environment). It will be appreciated that the client device, and/or corresponding data for communicating with the appropriate control device associated with the at least one travelling object, may be identified utilizing any of the data available to the real-time pathing apparatus 200.

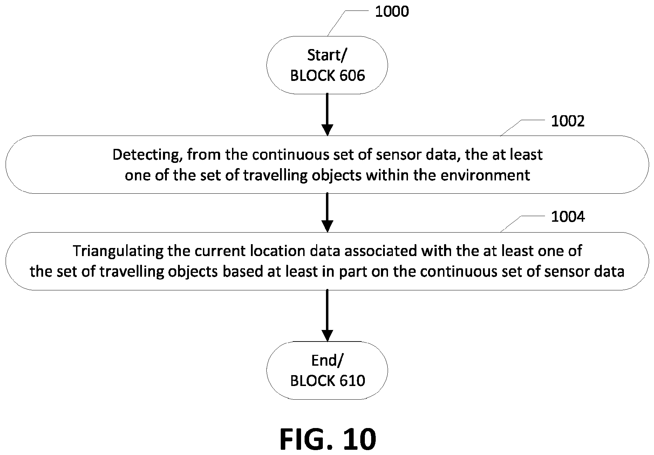

FIG. 10 illustrates a flowchart depicting example operations for determining current location data associated with at least one travelling object in accordance with at least some example embodiments of the present disclosure. Specifically, FIG. 10 depicts operations of an example process 1000. In some embodiments, the process 1000 is embodied by computer program code stored on a non-transitory computer-readable storage medium of a computer program product configured for execution to perform the process as depicted and described. Alternatively or additionally, in some embodiments, the process 1000 is performed by one or more specially configured computing devices, such as the real-time pathing apparatus 200 alone or in communication with one or more other component(s), device(s), system(s), and/or the like. In this regard, in some such embodiments, the real-time pathing apparatus 200 is specially configured by computer-coded instructions (e.g., computer program instructions) stored thereon, for example in the memory 204 and/or another component depicted and/or described herein and/or otherwise accessible to the real-time pathing apparatus 200, for performing the operations as depicted and described. In some embodiments, the real-time pathing apparatus 200 is in communication with one or more external apparatus(es), system(s), device(s), and/or the like, to perform one or more of the operations as depicted and described. For example, the real-time pathing apparatus 200 may be in communication with any number of real-time sensor(s), client device(s), control device(s), and/or travelling object(s). For purposes of simplifying the description, the process 1000 is described as performed by and from the perspective of the real-time pathing apparatus 200, for example embodying a particular real-time data aggregating and processing system.

The process 1000 begins at operation 1002. In some embodiments, the process 1000 begins after one or more operations depicted and/or described with respect to any of the other processes described herein. For example, in some embodiments as depicted, the process 950 begins after execution of operation 606 as depicted and described with respect to the process 600. In this regard, some or all of the process 1000 may replace or supplement one or more blocks depicted and/or described with respect to any of the other processes described herein. For example, the process 1000 in some embodiments replaces the operation 608 as depicted and described with respect to the process 600. Upon completion of the process 1000, the flow of operations may terminate. Additionally or alternatively, as depicted, upon completion of the process 1000, flow may return to one or more operations of another process, for example the operation 610 as depicted and described with respect to the process 600. It should be appreciated that, in some embodiments, the process 1000 embodies a subprocess of one or more other process(es), such as the process 600.

At operation 1002, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to detect, from the continuous set of sensor data, the at least one travelling object of the set of travelling objects within the environment. In some embodiments, the real-time pathing apparatus 200 detects representation(s) corresponding to the travelling object(s) in one or more portions of the continuous set of sensor data, for example from image data within the continuous set of sensor data. For example, the real-time pathing apparatus 200 may process image data included in the continuous set of sensor data to detect representations corresponding to a travelling object within the image data utilizing one or more image processing algorithm(s), machine learning model(s), and/or the like. As described herein, the real-time pathing apparatus 200 may similarly determine the identity corresponding to each travelling object in the at least one travelling object of the set of travelling objects within the environment.

At operation 1004, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to triangulate the current location data object associated with the at least one travelling object of the set of travelling objects. The real-time pathing apparatus 200 may triangulate the current location data associated with the at least one travelling object of the travelling objects based at least in part on a continuous data subset of the continuous set of sensor data that includes image data from one or more real-time sensor(s). For example, the real-time pathing apparatus 200 may determine the current location data corresponding to a travelling object based on the position of the representation in such image data corresponding to representations of other items and/or objects with known location(s) similarly represented in such image data, marker(s) having known location(s) within the environment represented in the image data (e.g., floor markers, wall markers, and/or the like), a known location of the real-time sensor that captured the image data, and/or the like.

Additionally or alternatively, in some embodiments, the real-time pathing apparatus 200 triangulates the at least one travelling object of the set of travelling objects from other data of the continuous set of sensor data, for example a continuous data subset including motion data, a continuous data subset including range data, and/or the like. Such data of the continuous set of sensor data may supplement one or more determinations made utilizing the image data of the continuous set of sensor data, and/or in other embodiments may be sufficient to triangulate the current location data associated with the at least one travelling object of the set of travelling objects without processing the image data of the continuous set of sensor data. For example, in some embodiments the real-time pathing apparatus 200 detects a travelling object represented within a first continuous data subset including image data of the continuous set of sensor data, and identifies the travelling object based at least in part on one or more other continuous data subsets of the continuous set of sensor data. In some other embodiments the real-time pathing apparatus 200 detects a travelling object represented within a first continuous data subset including image data of the continuous set of sensor data, and triangulates the location data associated with the travelling object based at least in part on the other continuous data subsets of the continuous set of sensor data.

FIG. 11 illustrates a flowchart depicting example operations for generating optimized pathing data based on an updated task process in accordance with at least some example embodiments of the present disclosure. Specifically, FIG. 11 depicts operations of an example process 1100. In some embodiments, the process 1100 is embodied by computer program code stored on a non-transitory computer-readable storage medium of a computer program product configured for execution to perform the process as depicted and described. Alternatively or additionally, in some embodiments, the process 1100 is performed by one or more specially configured computing devices, such as the real-time pathing apparatus 200 alone or in communication with one or more other component(s), device(s), system(s), and/or the like. In this regard, in some such embodiments, the real-time pathing apparatus 200 is specially configured by computer-coded instructions (e.g., computer program instructions) stored thereon, for example in the memory 204 and/or another component depicted and/or described herein and/or otherwise accessible to the real-time pathing apparatus 200, for performing the operations as depicted and described. In some embodiments, the real-time pathing apparatus 200 is in communication with one or more external apparatus(es), system(s), device(s), and/or the like, to perform one or more of the operations as depicted and described. For example, the real-time pathing apparatus 200 may be in communication with any number of real-time sensor(s), client device(s), control device(s), and/or travelling object(s). For purposes of simplifying the description, the process 1100 is described as performed by and from the perspective of the real-time pathing apparatus 200, for example embodying a particular real-time data aggregating and processing system.

The process 1100 begins at operation 1102. In some embodiments, the process 1100 begins after one or more operations depicted and/or described with respect to any of the other processes described herein. For example, in some embodiments as depicted, the process 1100 begins after execution of operation 606 as depicted and described with respect to the process 600. In this regard, some or all of the process 1100 may replace or supplement one or more blocks depicted and/or described with respect to any of the other processes described herein. For example, the process 1100 in some embodiments replaces the operation 608 as depicted and described with respect to the process 600. Upon completion of the process 1100, the flow of operations may terminate. Additionally or alternatively, as depicted, upon completion of the process 1100, flow may return to one or more operations of another process, for example the operation 610 as depicted and described with respect to the process 600. It should be appreciated that, in some embodiments, the process 1100 embodies a subprocess of one or more other process(es), such as the process 600.

At operation 1102, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to generate an updated task process associated with the at least one travelling object of the set of travelling objects. A task process may include any number of task operations to be performed by a travelling object within the environment, and a particular location within the environment at which the task operation is to be performed. In some such embodiments, the task operations associated with the task process is in a particularly defined order. In this regard, a task process may similarly be associated with a particular defined order of target locations that the corresponding travelling object is to traverse to so as to perform such task operation(s). In some such embodiments, the current pathing data associated with a particular travelling object may represent a path along which the travelling object is to travel to reach a next target location based on the next task operation to be performed in the current task process associated with the travelling object, and/or to reach each target location in the order indicated by the current task process associated with the travelling object.

In some embodiments, the updated task process associated with the at least one travelling object includes a new task operation not present in a current task process associated with the at least one travelling object. In one example context, the new task operation may indicate a new item located at a particular target location where the new item is to be selected, removed, and/or otherwise interacted with by the travelling object. Each task process may define a particular order in which each task operations embodied in said task process is to be performed. Accordingly, the real-time pathing apparatus 200 may generate the updated task process including one or more new task operations at any position in the order of task operations. Alternatively or additionally, the updated task process may include one or more new task operations that replace an existing task operation at a particular position in the order of task operations. In some embodiments, the real-time pathing apparatus 200 determines a new task operation to add to the updated task process that is closest to the current location of the travelling object based on the current location data associated with the travelling object, or is closest to a future location along the path defined by the current pathing data associated with the travelling object. Alternatively or additionally, in some embodiments, the real-time pathing apparatus 200 determines a new task operation that sufficiently alters the path defined by optimized pathing data based at least in part on the updated task process (e.g., as described with respect to operation 1104) to avoid one or more detected event(s), circumstance(s), scenario(s), and/or the like (e.g., collision and/or congestion event(s)) within the environment.

Alternatively or additionally, in some embodiments, the updated task process corresponding to a particular travelling object embodies a reordering of the task operations within a current task process associated with a particular travelling object. In this regard, one or more of the existing task operations included in a current task process may be rearranged such that the one or more existing task operations are performed at a different point in the order of task operations. For example, in this regard, the updated task process representing the reordered may result in an updated path along which the travelling object is to traverse to perform such task operations, as described with respect to operation 1104. The optimized pathing data representing the updated path may avoid one or more detected event(s), circumstance(s), scenario(s), and/or the like within the environment.

At operation 1104, the real-time pathing apparatus 200 includes means, such as the real-time data processing circuitry 212, real-time data intake circuitry 210, the communications circuitry 208, the input/output circuitry 206, the processor 202, and/or the like, or a combination thereof, to generate the optimized pathing data for the at least one travelling object based at least in part on the updated task process. In some embodiments, the optimized pathing data represents a series of sub-paths along which the travelling object is to traverse to perform each task operation in the order defined by the updated task process. In this regard, for example the optimized pathing data may be generated embodying a first sub-path from the current location associated with the travelling object to a first target location associated with the next task operation in the updated task process, a second sub-path from the first target location to a second target location associated with the subsequent task operation in the updated task process (e.g., the second task to be performed in the order), and so on for all remaining task operations.

Each sub-path may represent the most direct path from a starting location to a target location. Alternatively or additionally, in some embodiments, one or more portions of the path is optimized to avoid particular area(s), event(s), and/or the like. As described herein, the optimized pathing data and/or sub-paths represented therein may be generated to avoid one or more event(s), scenario(s), and/or other circumstances within the environment. It will be appreciated that, in some embodiments, any of a myriad of known pathing algorithms may be utilized to generate alternative paths that avoid a particular location, area, and/or the like, for example to avoid location(s) at which an event is determined to occur or likely to occur within the environment.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method comprising:
receiving, in real-time via a high-throughput communications network, a continuous set of sensor data associated with one or more real-time sensors;
determining a status associated with one or more portions of an environment based at least in part on the continuous set of sensor data;
generating optimized pathing data for at least one travelling object in the environment based on the status associated with the one or more portions of the environment; and
outputting the optimized pathing data to a computing device associated with the at least one travelling object.

2. The method according to claim 1, wherein determining the status associated with one or more portions of the environment comprises:
determining, based at least in part on the continuous set of sensor data, current location data associated with at least one travelling object of a set of travelling objects within an environment; and
identifying current pathing data associated with each of the at least one travelling object of the set of travelling objects, each current pathing data associated with a current task process,
and wherein generating the optimized pathing data comprises:
generating optimized pathing data for the at least one travelling object of the set of travelling objects based at least in part on the current pathing data associated with each of the set of travelling objects and the current location data associated with each of the set of travelling objects.

3. The method according to claim 2, wherein generating the optimized pathing data for the at least one travelling object of the set of travelling objects comprises:
determining a collision event will occur associated with at least a first travelling object of the set of travelling objects and a second travelling object of the set of travelling objects based at least in part on a first current pathing data corresponding to the first travelling object and a second current pathing data corresponding to the second travelling object; and
generating the optimized pathing data comprising alternative pathing data based at least in part on the current location data and the alternative pathing data avoiding the collision event.

4. The method according to claim 2, wherein generating the optimized pathing data for the at least one travelling object of the set of travelling objects comprises:
determining a congestion event will occur associated with a plurality of the travelling objects based at least in part on the current pathing data associated with each travelling object of the travelling object of travelling objects; and
generating the optimized pathing data comprising alternative pathing data for the at least one travelling object of the set of travelling objects based at least in part on the current location data, the alternative pathing data avoiding the congestion event.

5. The method according to claim 2, wherein the continuous set of sensor data comprises a plurality of continuous data subsets, each data subset associated with a different data type of a plurality of data types.

6. The method according to claim 2, wherein outputting the optimized pathing data to the computing device associated with the at least one travelling object comprises:
causing the at least one travelling object to automatically traverse along a path represented by the optimized pathing data.

7. The method according to claim 2, wherein outputting the optimized pathing data to the computing device associated with the at least one travelling object comprises:
outputting the optimized pathing data to a client device associated with the at least one travelling object.

8. The method according to claim 2, wherein determining, based at least in part on the continuous set of sensor data, the current location data associated with the at least one travelling object of the set of travelling objects within the environment comprises:
detecting, from the set of sensor data, the at least one travelling object of the set of travelling objects within the environment; and
triangulating the current location data associated with the at least one set of travelling objects from the continuous set of sensor data.

9. The method according to claim 2, wherein generating the optimized pathing data for the at least one travelling object of the set of travelling objects comprises:
generating an updated task process associated with the at least one travelling object of the set of travelling objects; and
generating the optimized pathing data for the at least one travelling object based at least in part on the updated task process.

10. The method according to claim 2, wherein generating the optimized pathing data for the at least one travelling object of the set of travelling objects comprises:
generating an updated task process by reordering the current task process associated with the at least one travelling object of the set of travelling objects; and
generating the optimized pathing data for the at least one travelling object based at least in part on the updated task process.

11. The method according to claim 2, wherein the set of travelling objects comprises a plurality of instruction-controlled objects.

12. The method according to claim 1, wherein the high-throughput communications network comprises a 5G cellular communications network or a Wi-Fi 6 communications network.

13. The method according to claim 1, wherein the one or more real-time sensors comprises at least one mobile real-time sensor and at least one fixed real-time sensor.

14. An apparatus comprising at least one processor and at least one memory including computer program code, the at least one memory and the computer program code configured to, with the at least one processor, cause the apparatus to perform any one of the methods according to claims 1-13.

15. A computer program product comprising at least one non-transitory computer-readable medium having computer-readable program instructions stored therein, the computer-readable program instructions comprising instructions, which when performed by an apparatus, are configured to cause the apparatus to at least perform any one of the methods according to claims 1-13.
